(19) Europäisches Patentamt
European Patent Office
Office européen des brevets

(11) **EP 2 385 389 B1**

(12) **EUROPÄISCHE PATENTSCHRIFT**

(45) Veröffentlichungstag und Bekanntmachung des Hinweises auf die Patenterteilung:
**05.06.2013 Patentblatt 2013/23**

(21) Anmeldenummer: **10176470.2**

(22) Anmeldetag: **13.09.2010**

(51) Int Cl.:
***G01S 5/02*** *(2010.01)*

(54) **Vorrichtung und Verfahren zur Kalibrierung einer auf Funkortung basierenden Positionsbestimmungsvorrichtung**

Device and method for calibrating a radio-based position determining device

Dispositif et procédé de calibrage d'un dispositif de détermination de position basé sur une orientation radio

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **22.04.2010 US 326754 P**

(43) Veröffentlichungstag der Anmeldung:
**09.11.2011 Patentblatt 2011/45**

(73) Patentinhaber: **Fraunhofer-Gesellschaft zur Förderung der Angewandten Forschung e.V.
80686 München (DE)**

(72) Erfinder:
• **Meyer, Steffen
91052 Erlangen (DE)**
• **Hupp, Jürgen
90425 Nürnberg (DE)**
• **Vaupel, Thorsten
34576 Homberg (DE)**
• **Haimerl, Stephan
92358 Seubersdorf (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
**EP-A1- 1 795 912        WO-A1-2004/008796
US-A1- 2005 014 518      US-A1- 2009 247 185**

• **HENDRIK LEMELSON ET AL: "Automatic identification of fingerprint regions for quick and reliable location estimation", PERVASIVE COMPUTING AND COMMUNICATIONS WORKSHOPS (PERCOM WORKSHOPS), 2010 8TH IEEE INTERNATIONAL CONFERENCE ON, IEEE, PISCATAWAY, NJ, USA, 29. März 2010 (2010-03-29), Seiten 540-545, XP031679874, ISBN: 978-1-4244-6605-4**
• **XUEJING JIANG ET AL: "An Enhanced Location Estimation Approach Based on Fingerprinting Technique", COMMUNICATIONS AND MOBILE COMPUTING (CMC), 2010 INTERNATIONAL CONFERENCE ON, IEEE, PISCATAWAY, NJ, USA, 12. April 2010 (2010-04-12), Seiten 424-427, XP031680632, ISBN: 978-1-4244-6327-5**

## Beschreibung

Das Gebiet der vorliegenden Erfindung bezieht sich auf eine Kalibrierung einer Positionsbestimmungsvorrichtung eines funkbasierten Ortungssystems und insbesondere auf eine Kalibrierung hinsichtlich einer Signalstärke von empfangenen Funksignalen.

Für eine Lokalisation mobiler Endgeräte stehen verschiedene Ortungstechnologien zur Verfügung. Das wohl bekannteste System zur Lokalisierung bzw. Navigation im Outdoorbereich ist das satellitengestützte Global Positioning System (GPS). Für die Lokalisierung bzw. Navigation innerhalb von Gebäuden bzw. in einem Indoorbereich sind verschiedene Ansätze bekannt, wie beispielsweise Infrarot-Systeme, RFID-Systeme (Radio Frequency Identification) oder auch Feldstärkeauswertungen von IEEE 802.11 WLAN-Netzwerken (WLAN = Wireless Local Area Network). Das GPS-System ist momentan nur für den Outdoorbereich zuverlässig verfügbar. Neuere Erweiterungen, wie hochsensible Empfänger oder das sogenannte A-GPS (Assisted GPS) stellen Versuche dar, die Technologie auch innerhalb von Gebäuden nutzbar zu machen. A-GPS kombiniert dabei das satellitenbasierte GPS-System mit einem Empfang sogenannter Assistenzinformationen aus zellularen Mobilfunknetzen. Zur Zeit weisen diese Technologien jedoch noch nicht die gewünschten mittleren Genauigkeiten auf. Infrarot- und RFID-Systeme stehen im allgemeinen nicht flächendeckend zur Verfügung und sind an spezifische Voraussetzungen gebunden.

Für die drahtlose Netzwerkanbindung tragbarer Geräte hat sich der WLAN-Standard nach IEEE 802.11 etablieren können. Dieser wird kontinuierlich weiterentwickelt, sowohl hinsichtlich der Datenrate als auch der Reichweite. Etablierte Standards, ebenso wie noch in der Entwurfsphase befindliche Standards, ermöglichen eine breitbandige Datenübertragung mit hohen Datenraten und zeichnen sich durch einen hohen Integrationsgrad aus, welcher kostengünstige Hardware ermöglicht. In aktuellen PDAs (Personal Digital Assistents) und Smartphones sind schnurlose Schnittstellen, wie das erwähnte WLAN, meist integriert. Darüber hinaus wird oft Bluetooth, und in Zukunft eventuell auch WiMAX eingesetzt werden.

Im Fall von WLAN stehen inzwischen an vielen Orten mit hoher Besucherfrequenz kommerzielle öffentliche WLAN-Zugangspunkte (sogenannte Hotspots) zur Verfügung. Darüber hinaus hat die stark steigende Verbreitung von Breitband-Internetanschlüssen (z.B. über DSL) auch im privaten Bereich die Verbreitung von WLAN als günstige Heimvernetzungstechnologie gefördert. Mehrere Studien haben ergeben, dass innerstädtische Bereiche an vielen Orten heute bereits nahezu flächendeckend mit WLAN versorgt oder gar überabgedeckt sind. Insbesondere Orte des täglichen Lebens und von touristischem Interesse sind diesbezüglich gut ausgestattet. Momentan bietet es sich daher an, WLAN als Basistechnologie für die Ortung mobiler Geräte zu verwenden. In Zukunft werden sicherlich auch andere Technologien zum Einsatz kommen, auf die sich das geschilderte erfinderische Konzept ebenfalls anwenden lässt.

Eine Ortung mobiler Endgeräte in WLAN-Netzen kann prinzipiell durch Auswertung der von einem mobilen Endgerät empfangenen Basisstationen (Hotspots bzw. Access Points) erfolgen, wobei beispielsweise deren jeweilige auf dem Endgerät empfangene Signalstärke ausgewertet wird. WLAN-Signale werden jedoch durch Bauwerke und andere Hindernisse stark abgeschirmt, wobei insbesondere in Gebieten mit umfassender WLAN-Versorgung üblicherweise keine idealen Freifeldbedingungen vorherrschen, da sich diese im Stadtgebiet befinden. Somit kann nicht direkt von der gemessenen Signalstärke bzw. Feldstärke auf die Entfernung von einem mobilen Endgerät zu einer Basisstation oder einem anderen Kommunikationspartner geschlossen werden.

Bei WLAN-basierten Ortungssystemen kommt als Basisverfahren oft ein sogenanntes "Received-Signal-Strength Fingerprinting" zum Einsatz. Dieses Radiofingerabdruckverfahren basiert auf der Annahme, dass an einem aktuellen Ort empfangene bzw. empfangbare Signalstärken von Funksignalen mehrerer Funkstationen den aktuellen Ort bzw. die aktuelle Position eindeutig charakterisieren. Existiert eine Referenzdatenbasis, die für eine Anzahl von Referenzorten bzw. Referenzpositionen Senderkennungen von dort zu Referenzzeitpunkten empfangenen bzw. empfangbaren Funkstationen, sowie die Signalstärken der entsprechenden Funksignale enthält, so kann aus einem Satz aktueller Messwerte (Senderkennungen und zugehörige Signalstärkenwerte) auf die aktuelle Position des mobilen Gerätes geschlossen werden, indem ein Abgleich zwischen aktuell gemessenen Messwerten und den Referenzwerten der Datenbasis erfolgt. Dieser Abgleich - auch Matching bezeichnet - bewertet für jeden Referenzpunkt, wie ähnlich dessen vorher aufgezeichnete Messwerte bzw. Referenzwerte zu den aktuellen Messwerten der aktuellen Position sind. Der oder die ähnlichsten Referenzpunkte bilden dann eine Basis für einen Schätzwert für den aktuellen Aufenthaltsort des mobilen Endgerätes.

Die Europäische Patentanmeldung EP 1 795 912 A1 beschreibt eine Technik zur Ermittlung der Position eines Zielobjekts in einer schnurlosen Kommunikationsumgebung ("wireless communication environment"). Ein Datenmodel modelliert mehrere Stichproben- oder Samplepunkte. Jeder Samplepunkt umfasst einen Ort und einen Satz von erwarteten Signalwerten. Signalwerte werden am Ort des Zielobjekts beobachtet. Auf der Basis der beobachteten Signalwerte und einem Satz von Relevanzindikatoren wird ein aktueller Satz von relevanten Samplepunkten bestimmt und verwendet, zusammen mit den Signalwertbeobachtungen, um den Ort des Zielobjekts zu schätzen.

Für eine Referenzdatenbasis kann durch Referenzmessungen die Signalstärke von einem zu einem Referenzmesszeitpunkt an einer Referenzposition empfangbaren Funksender experimentell ermittelt werden. Dadurch entsteht eine Datenbasis, die zu jeder geografischen Referenzposition eine Liste von Funksendern (Access-Points) mit der jeweilig zugeordneten Empfangsfeldstärke und -qualität enthält. Diese einer Referenzposition zugeordnete Liste kann auch als Referenzmesspaket bzw. Referenzpaket (RP) bezeichnet werden. Bei einer WLAN-Implementierung kann eine solche Referenzdatenbasis beispielsweise folgendermaßen aussehen:

| RID | MAC | RSSI | PGS | X | Y | Z | MAPNR | CREATED |
|---|---|---|---|---|---|---|---|---|
| 1 | 00.0D.54.9E.17.81 | 46530 | 100 | 5795 | 15627 | 150 | 0 | 12.03.07 12:42 |
| 1 | 00.00.54.9E.1A.BA | 67260 | 90 | 5795 | 15627 | 150 | 0 | 12.03.07 12:42 |
| 1 | 00.00.54.9E.1D.64 | 72002 | 88 | 5795 | 15627 | 150 | 0 | 12.03.07 12:42 |
| 1 | 00.0E.6A.D3.B9.8B | 59531 | 100 | 5795 | 15627 | 150 | 0 | 12.03.07 12:42 |
| 1 | 00.0F.A3.10.07.6C | 46464 | 96 | 5795 | 15627 | 150 | 0 | 12.03.07 12:42 |
| 1 | 00.0F.A3.10.07.FB | 74488 | 94 | 5795 | 15627 | 150 | 0 | 12.03.07 12:42 |
| 1 | 00.0F.A3.10.09.SF | 72375 | 97 | 5795 | 15627 | 150 | 0 | 12.03.07 12:42 |
| 2 | 00.00.54.9E.17.81 | 54138 | 100 | 14399 | 15451 | 150 | 0 | 12.03.07 12:43 |
| 2 | 00.00.54.9E.18.1D | 76560 | 11 | 14399 | 15451 | 150 | 0 | 12.03.07 12:43 |
| 2 | 00.0D.54.9E.1A.BA | 62318 | 94 | 14399 | 15451 | 150 | 0 | 12.03.07 12:43 |
| 2 | 00.00.54.9E.1D.64 | 71348 | 96 | 14399 | 15451 | 150 | 0 | 12.03.07 12:43 |
| 2 | 00.0E.6A.D3.B9.8B | 45393 | 100 | 14399 | 15451 | 150 | 0 | 12.03.07 12:43 |
| 2 | 00.0F.A3.10.07.6C | 66853 | 96 | 14399 | 15451 | 150 | 0 | 12.03.07 12:43 |
| 2 | 00.0F.A3.10.07.FB | 72251 | 100 | 14399 | 15451 | 150 | 0 | 12.03.07 12:43 |
| 2 | 00.0F.A3.10.09.5F | 70990 | 90 | 14399 | 15451 | 150 | 0 | 12.03.07 12:43 |
| 3 | 00.00.54.9E.17.81 | 58291 | 100 | 24583 | 15627 | 150 | 0 | 12.03.07 12:43 |
| 3 | 00.00.54.9E.18.1D | 78610 | 68 | 24583 | 15627 | 150 | 0 | 12.03.07 12:43 |
| 3 | 00.00.54.9E.1A.BA | 62153 | 98 | 24583 | 15627 | 150 | 0 | 12.03.07 12:43 |
| 3 | 00.00.54.9E.1D.64 | 64187 | 90 | 24583 | 15627 | 150 | 0 | 12.03.07 12:43 |
| 3 | 00.0E.6A.D3.B9.8B | 32851 | 100 | 24583 | 15627 | 150 | 0 | 12.03.07 12:43 |
| 3 | 00.0F.A3.10.07.6C | 69006 | 96 | 24583 | 15627 | 150 | 0 | 12.03.07 12:43 |
| 3 | 00.0F.A3.10.07.FB | 71749 | 92 | 24583 | 15627 | 150 | 0 | 12.03.07 12:43 |
| 3 | 00.0F.A3.10.09.5F | 71482 | 83 | 24583 | 15627 | 150 | 0 | 12.03.07 12:43 |
| 3 | 00.0F.A3.10.09.80 | 71000 | 40 | 24583 | 15627 | 150 | 0 | 12.03.07 12:43 |

Dabei enthält die Tabelle die folgenden Informationen:

- Referenzposition-Identifikation (ID) (hier: 1, 2, 3),

- MAC-Adressen der an der jeweiligen Referenzposition empfangenen Funksender,

- die Empfangsfeldstärken der an der Referenzposition empfangbaren Funksender (RSSI = Received Signal Strength Indicator; 46,56 bedeutet beispielsweise -46,56 dBm),

- die Referenzposition in kartesischen, metrischen Koordinaten (x, y, z), sowie

- den Zeitpunkt bzw. Zeitstempel der Messwertaufnahme.

Die optionalen Werte PGS ("Percentage seen") geben an, wie häufig die jeweilige Station bei der Messwertaufnahme prozentual gesehen wurde (d.h. PGS = 90 bedeutet, dass im Schnitt die Station bei 9 von 10 Messungen gemessen wurde).

Zusätzlich kann ein Referenzpaket Orientierungsinformationen umfassen, die Informationen über eine räumliche Orientierung eines mobilen Endgeräts enthalten, mit welchem das entsprechende Referenzpaket aufgezeichnet wurde. D.h., die Orientierungsinformationen speichern Informationen darüber, in welche Richtung ein mobiles Endgerät beim Einmessen des Referenzpunkts gehalten wurde bzw. in welche Richtung das mobile Endgerät beim Einmessen des Referenzpunkts bewegt wurde. Dies ist vor allem dann interessant, wenn das mobile Endgerät, wie z.B. ein WLAN-fähiges Gerät, unmittelbar vor dem Körper eines Nutzers gehalten wird, so dass es durch den Körper zu Abschattungseffekten kommen kann. Selbst ohne diese besagten körperbedingten Abschattungseffekte kann eine zusätzliche Orientierungsinformation nützlich sein, da praktisch jede Antenne eine Richtcharakteristik aufweist. Daher kann unter Orientierung beispielsweise auch die räumliche Ausrichtung der Hauptkeule einer Antenne eines mobilen Endgeräts verstanden werden.

Die beschriebenen Referenzdaten bzw. Referenzpakete werden typischerweise zumindest während einer Trainings- oder Einlernphase innerhalb des Betriebs des funkbasierten Ortungssystems erzeugt und können auf unterschiedlichen Wegen erhoben werden: z. B. manuelles Erzeugen der einzelnen Referenzpunkte bzw. Referenzpakete, Erzeugen von Referenzdaten aus einer bewegten Messung heraus oder Erzeugen von Referenzdaten anhand von Planungsdaten für das funkbasierte Ortungssystem.

Wie oben erwähnt nutzt eine funkbasierte Ortung mittels Fingerprinting in erster Linie die Signalstärkewerte (RSSI) von Funksendern zur Positionsbestimmung. Die von der Positionsbestimmungsvorrichtung beobachtete Signalstärke, d. h. die Signalstärke, wie sie innerhalb der Positionsbestimmungsvorrichtung für Ortungszwecke verwendet wird, kann Schwankungen unterliegen, die auf verschiedene Ursachen zurückgeführt werden können. Beispielsweise unterscheiden sich unterschiedliche Antennen für die Messung von WLAN-Signalen unter Umständen relativ stark in ihrer Qualität, vor allem wenn man dies vor dem Hintergrund betrachtet, dass eine möglichst geräte- und plattformunabhängige Software zur WLAN-Lokalisierung auf einer möglichst großen Vielzahl an unterschiedlichen Endgerätetypen zum Einsatz kommen soll. Derartige Unterschiede in der Antennenqualität haben unter anderem Auswirkungen auf die beobachteten Signalpegel der zur Ortung verwendeten Funksignale.

Neben den erwähnten Unterschieden bei der Antennenqualität können sich auch andere Ursachen auf den Signalpegel von Funksignalen auswirken, die zur Ortung verwendet werden. Beispielsweise kann die Positionsbestimmungsvorrichtung zeitweise in der Tasche eines Kleidungsstücks oder in einem Gepäckstück mitgeführt werden. In derartigen Fällen werden die Funksignale durch die Materialien des Kleidungsstücks oder des Gepäckstücks mehr oder weniger stark gedämpft.

Da die Signalstärke bzw. der Signalpegel Rückschlüsse zulässt auf eine Entfernung zwischen der Positionsbestimmungsvorrichtung und einem Funksender, der das entsprechende Funksignal aussendet, kann eine Kenntnis der tatsächlich vorliegenden Signalstärke (d. h. ohne verfälschende Einflüsse aufgrund von unterschiedlichen Antennenqualitäten oder variabler Dämpfung) zu einer zuverlässigen Ortung einer aktuellen Position der Positionsbestimmungsvorrichtung beitragen.

Demnach besteht die Aufgabe der vorliegenden Erfindung darin, die funkbasierte Ortung robuster und/oder unanfälliger zu machen gegenüber konstanten oder quasi-konstanten Einflüssen auf die Signalstärke der zur Ortung verwendeten Funksignale.

Diese Aufgabe wird durch eine Vorrichtung zur Kalibrierung einer Positionsbestimmungsvorrichtung mit den Merkmalen des Anspruchs 1 oder ein Verfahren zum Kalibrieren einer auf funkbasierter Ortung basierenden Positionsbestimmungsvorrichtung nach Anspruch 14 gelöst.

Gemäß der hierin offenbarten Lehre werden einzelne Funksignale nicht (nur) isoliert voneinander untersucht, sondern es werden Funksignalmuster aus einem oder mehreren Funksignalen erzeugt, die mit Referenzdaten verglichen werden können. Die Erzeugung der Funksignalmuster kann so gestaltet sein, dass bestimmte Eigenschaften des Musters im Wesentlichen invariant gegenüber den oben erwähnten (beispielsweise geräteabhängigen) Einflüssen sind. Die Kalibrierung gemäß der hierin offenbarten Lehre zielt auf eine Korrektur von konstanten oder zumindest quasi-konstanten Einflüssen ab. Somit kann sich die Kalibrierung auf eine relativ breite Datenbasis stellen, die z. B. zeitlich, räumlich, hinsichtlich einer Frequenz der Funksignale oder einer anderen Größe hinreichend gestreut ist, um zufällige Abweichungen herauszumitteln und/oder repräsentativ zu sein.

Gemäß Ausführungsbeispielen der vorliegenden Erfindung wird eine Vorrichtung zur Kalibrierung einer Positionsbestimmungsvorrichtung bereitgestellt. Die Vorrichtung zur Kalibrierung umfasst eine Einrichtung zum Vergleichen eines empfangenen Funksignalmusters mit einer Vielzahl von Referenz-Funksignalmustern, eine Einrichtung zum Ermitteln einer Signalstärkedifferenz und eine Einrichtung zum Ermitteln und zum Bereitstellen eines Kalibrierungswerts an die Positionsbestimmungsvorrichtung. Die Einrichtung zum Vergleichen eines empfangenen Funksignalmusters mit einer Vielzahl von Referenz-Funksignalmustern ist ausgebildet, eine Auswahl-Untermenge aus der Vielzahl der Referenz-Funksignalmuster mittels eines Überstimmungsmaßes zwischen dem empfangenen Funksignalmuster und jeweils einem Referenz-Funksignalmuster aus der Vielzahl der Referenz-Funksignalmuster auszuwählen. Das Ermitteln des Kalibrierungswerts durch die Einrichtung zum Ermitteln des Kalibrierungswerts basiert auf der Signalstärkedifferenz.

Das empfangene Funksignalmuster umfasst zumindest eines von einer Senderkennung eines empfangbaren Funksignalsenders und einer Signalstärke eines empfangbaren Funksignals. Die Einrichtung zum Vergleichen ist ferner ausgebildet. relative Signalstärken für unterschiedliche Senderkennungen innerhalb eines empfangenen Funksignalmusters mit entsprechenden relativen Signalstärken innerhalb eines Referenz-Funksignalmusters in Bezug zueinander zu setzen und daraus auf das Übereinstimmungsmaß zu schließen.

Die Auswahl-Untermenge nimmt solche Referenz-Funksignalmuster auf, die gemäß einer Definition ähnlich zu dem empfangenen Funksignalmuster sind. Diese Ähnlichkeit wird durch das Übereinstimmungsmaß typischerweise quantitativ, zumindest aber qualitativ, abgebildet. In der Regel kann davon ausgegangen werden, dass die in die Auswahl-Untermenge aufgenommenen Referenz-Funksignalmuster sich auf Positionen beziehen, die räumlich nah zu einer aktuellen Position der Positionsbestimmungsvorrichtung liegen, d. h. der Position, an der das empfangene Funksignalmuster empfangen wurde. Vereinfachend kann angenommen werden, dass sich Unterschiede zwischen dem empfangenen Funksignalmuster und einem (ähnlichen) Referenz-Funksignalmuster dahin gehend auswirken, dass ein zur Ortung verwendeter Signalpegel des empfangenen Funksignalmusters konstant niedriger oder höher ermittelt wird, als es bei der Erzeugung der Referenzdaten der Fall war. Beispielsweise lässt sich bei genauerer Betrachtung oftmals eine nahezu konstante Differenz der Signalpegel zwischen zwei Geräten über dem gesamten Messbereich feststellen. In einem anderen möglichen Szenario kann diese Differenz zumindest für die Zeitspanne, innerhalb der sich die Positionsbestimmungsvorrichtung in einem Kleidungs- oder Gepäckstück befindet, im Wesentlichen als konstant angenommen werden. Derartige quasikonstanten Schwankungen hinsichtlich der Signalpegel können nicht durch einen vorab bestimmten und fest in die Positionsbestimmungsvorrichtung einprogrammierten Korrekturwert angemessen berücksichtigt werden.

Gemäß Ausführungsbeispielen kann das Übereinstimmungsmaß indifferent hinsichtlich einer Skalierung des empfangenen Funksignalmusters und der Referenz-Funksignalmuster sein. Somit haben systematische oder zeitweilige Abweichungen hinsichtlich der Signalstärke keinen oder nur geringen Einfluss auf das Übereinstimmungsmaß und somit hängt die Entscheidung über eine Aufnahme eines bestimmten Referenz-Funksignalmusters in die Auswahl-Untermenge nicht von der absoluten Signalstärke des empfangenen Funksignalmusters und/oder des Referenz-Funksignalmusters ab, da die hierin offenbarte Kalibrierung ja von der Annahme ausgehen muss, dass zumindest die Signalstärke des empfangenen Funksignalmusters mit einem konstanten oder quasikonstanten Fehler behaftet ist.

Gemäß weiteren Ausführungsbeispielen kann die Einrichtung zum Vergleichen ausgebildet sein, das Übereinstimmungsmaß mit einem Schwellenwert $ACC_{Th}$ zu vergleichen. Wenn das Übereinstimmungsmaß zwischen dem empfangenen Funksignalmuster und dem bestimmten Referenz-Funksignalmuster eine von dem Schwellenwert $ACC_{Th}$ definierte Bedingung erfüllt, werden das empfangene Funksignalmuster und das bestimmte Referenz-Funksignalmuster mit Bezug zueinander (z.B. als Datenelemente einer zusammenfassenden Datenstruktur) in die Auswahl-Untermenge aufgenommen. Wenn dagegen das entsprechende Übereinstimmungsmaß die von dem Schwellenwert $ACC_{Th}$ definierte Bedingung nicht erfüllt, werden das empfangene Funksignalmuster und das bestimmte Referenz-Funksignalmuster nicht in die Auswahl-Untermenge aufgenommen. Dadurch, dass das empfangene Funksignalmuster und das bestimmte Referenz-Funksignalmuster bei Erfüllen der genannten Bedingung mit Bezug zueinander in die Auswahl-Untermenge aufgenommen werden, ist klar, zwischen welchen Funksignalmustern die Signalstärkedifferenz zu ermitteln ist. Durch den Schwellenwert $ACC_{Th}$ wird in der Regel sichergestellt, dass nur solche Referenz-Funksignalmuster in die Auswahl-Untermenge aufgenommen werden, die eine ausreichende Ähnlichkeit mit dem empfangenen Funksignalmuster aufweisen. Somit kann typischerweise hinreichend zuverlässig verhindert werden, dass sich die Kalibrierung auf ungeeignete Daten stützt.

Gemäß Ausführungsbeispielen kann die Einrichtung zum Vergleichen ausgebildet sein, für die Auswahl-Untermenge solche Referenz-Funksignalmuster auszuwählen, deren Übereinstimmungsmaß mit dem empfangenen Funksignalmuster innerhalb eines Toleranzbereichs liegen, der einen bis dahin ermittelten besten Übereinstimmungsmaßwert umfasst. Üblicherweise wird man den Toleranzbereich lediglich einseitig begrenzt ausführen, so dass ein neuer bester Übereinstimmungsmaßwert in jedem Fall Berücksichtigung finden wird. Der Toleranzbereich erstreckt sich jedoch gemäß diesem Ausführungsbeispiel auch in Richtung schlechterer Übereinstimmungsmaßwerte, ausgehend von dem bis dahin ermittelten besten Übereinstimmungsmaßwert. Auf diese Weise wird auch das am zweitbesten, am drittbesten, usw. übereinstimmende Referenz-Funksignalmuster in die Auswahl-Untermenge aufgenommen, so dass eine breitere Datenbasis für die Kalibrierung zur Verfügung steht. Auch kann auf diese Weise relativ zuverlässig verhindert werden, dass per Zufall (z.B. Rauschen innerhalb des entsprechenden Funksignals) ein Referenz-Funksignalmuster als einziges Referenz-Funksignalmuster die Kalibrierung beeinflussen kann, obwohl es bei Ausbleiben des zufälligen Einflusses nicht den besten Übereinstimmungsmaßwert erzielt hätte. Man beachte, dass der bis dahin ermittelte beste Übereinstimmungsmaßwert entweder fortlaufend während des Vergleichens des empfangenen Funksignalmusters mit der Vielzahl von Referenz-Funksignalmustern ermittelt werden kann, oder bereits vorab. In letzterem Fall würde ein absoluter bester Übereinstimmungsmaßwert als der bis dahin ermittelte beste Übereinstimmungsmaßwert dienen.

Gemäß einem Ausführungsbeispiel kann sich der Toleranzbereich zumindest einseitig von dem bis dahin ermittelten besten Übereinstimmungsmaßwert erstrecken über eine Toleranzbereichsbreite, die 30 % des bis dahin ermittelten besten Übereinstimmungsmaßwerts beträgt, bevorzugt 10 % des bis dahin ermittelten besten Übereinstimmungsmaßwerts und weiter bevorzugt 5 % des bis dahin ermittelten besten Übereinstimmungsmaßwerts. Beispielsweise wird bei einer Toleranzbereichsbreite von 5 % des bis dahin ermittelten besten Übereinstimmungsmaßwerts eine relativ strikte Auswahl getroffen hinsichtlich der Aufnahme von Referenz-Funksignalmustern in die Auswahl-Untermenge. Die Auswahl-Untermenge wird nur dann mehr als ein Referenz-Funksignalmuster enthalten, wenn die besten zwei, drei, vier oder mehr Referenz-Funksignalmuster Übereinstimmungsmaße mit dem empfangenen Funksignalmuster haben, die in einem engen Bereich, nämlich 5 % des besten Übereinstimmungsmaßwerts, liegen. Diese Situation kann beispielsweise dann auftreten, wenn die Positionsbestimmungsvorrichtung ungefähr gleich weit von mehreren Funksendern entfernt ist, und auch die Ausbreitungsbedingungen für die Funksignale im Wesentlichen ähnlich sind (oder sich Entfernung und Ausbreitungsbedingungen für verschiedene Funksignale einander kompensieren). In einem solchen Fall kann es sinnvoll sein, alle ungefähr gleich gut zu empfangenen Funksender für die Kalibrierung zu berücksichtigen, anstatt nur den am besten empfangbaren Funksender.

Alternativ kann die Einrichtung zum Vergleichen ausgebildet sein, dass sie solche Referenz-Funksignalmuster für die Auswahl-Untermenge auswählen kann, deren Übereinstimmungsmaß mit dem empfangenen Funksignalmuster in einem oberen bzw. optimalen Quantil der Übereinstimmungsmaße für die Vielzahl der Referenz-Funksignalmuster sind. Beispielsweise könnten ein Prozent aller Referenz-Funksignalmuster in die Auswahl-Untermenge aufgenommen werden, die die besten Übereinstimmungsmaße mit dem empfangenen Referenz-Funksignalmuster aufweisen. Es ist auch denkbar, dass die Auswahl-Untermenge stets eine bestimmte Anzahl von Referenz-Funksignalmustern enthält (beispielsweise fünf), sofern dies aufgrund anderer Bedingungen wie dem Schwellenwert $ACC_{Th}$ möglich ist. In der Tat kann es dazu kommen, dass die Auswahl-Untermenge aufgrund der Schwellenwertbedingung leer bleibt, wodurch die Kalibrierung typischerweise zeitweilig ausgesetzt wird.

Gemäß Ausführungsbeispielen kann die Einrichtung zum Vergleichen ausgebildet sein, solche Referenz-Funksignalmuster für die Auswahl-Untermenge auszuwählen, die folgende Kriterien erfüllen:

$$ACC_i \leq ACC_{max}$$

$$ACC_i \leq ACC_{Th}$$

und

$$ACC_{max} = ACC_0 \cdot LIMIT,$$

wobei $ACC_0$ ein Übereinstimmungsmaßwert eines Referenz-Funksignalmusters mit der derzeit besten Übereinstimmung ist, und $ACC_{Th}$ ein Schwellenwert für das Übereinstimmungsmaß bezüglich der Aufnahme in die Auswahl-Untermenge ist. Der Wert LIMIT kann beispielsweise etwas größer als 1 gewählt werden, also z. B. 1,05 oder 1,08. Der Wert LIMIT kann als die oben angegebenen Toleranzbereichsbreite angesehen werden.

Gemäß Ausführungsbeispielen kann das empfangene Funksignalmuster zumindest eines umfassen von einer Senderkennung eines empfangbaren Funksenders und einer Signalstärke eines empfangenen Funksignals. Wenn sowohl die Senderkennung als auch die Signalstärke des empfangenen Funksignals vorliegen, kann eine grobe Positionsbestimmung anhand der in einer letzten Zeiteinheit empfangenen Senderkennungen vorgenommen werden. Davon ausgehend kann eine feinere Positionsbestimmung dadurch erfolgen, dass die Signalstärken der empfangenen Funksignale in Verbindung mit den ebenfalls empfangenen Senderkennungen ausgewertet werden. Typischerweise wird ein Funksignalmuster eine Vielzahl von Datenelementen umfassen, die jeweils zumindest eine Senderkennung und einen Signalstärkewert enthalten. In entsprechender Weise kann zumindest ein Referenz-Funksignalmuster der Vielzahl von Referenz-Funksignalmustern zumindest eines umfassen von einer Senderkennung eines in dem Referenz-Funksignalmuster berücksichtigten Funksenders und einer Funksignal-Stärke eines in dem Referenz-Funksignalmuster berücksichtigten Funksignals. Auf diese Weise kann das Vergleichen der empfangenen Funksignalstärke und der Referenz-Funksignalmuster beispielsweise relative Signalstärken für unterschiedliche Senderkennungen innerhalb eines Funksignalmusters mit entsprechenden relativen Signalstärken innerhalb eines Referenz-Funksignalmusters in Bezug zueinander setzen und daraus Rückschlüsse über eine etwaige Übereinstimmung zwischen dem empfangenen Funksignalmuster und dem jeweiligen Referenz-Funksignalmuster erhalten.

Gemäß Ausführungsbeispielen kann die Einrichtung zum Ermitteln und Bereitstellen des Kalibrierungswerts ein Tiefpassfilter umfassen, das zumindest die Signalstärkedifferenz oder den Kalibrierungswert filtert. Das optionale Vorsehen eines Tiefpassfilters beruht auf der Erkenntnis, dass die durch die Kalibrierung auszugleichenden Unterschiede, die beispielsweise durch unterschiedliche Typen von Positionsbestimmungsvorrichtungen oder von sich (langsam) ändernden Umgebungsbedingungen verursacht werden, entweder konstant sind oder sich zumindest nur selten oder langsam ändern. Auf lange Sicht gesehen setzen sich am Ausgang des Tiefpassfilters konstante oder langsam veränderliche Signalbestandteile der Signalstärkedifferenz oder des Kalibrierungswerts durch, wohingegen schnelle Änderungen, die typischerweise auf zufälligen Ursachen beruhen, am Ausgang des Tiefpassfilters nur noch stark gedämpft vorliegen.

Gemäß einem Ausführungsbeispiel kann das Tiefpassfilter ein rekursives Filter sein mit einem Filtereingangskoeffizienten und einem Filterrückkopplungskoeffizienten. Dabei wird der Filterrückkopplungskoeffizient typischerweise größer als der Filtereingangskoeffizient gewählt, so dass der vom Ausgang des Tiefpassfilters zurückgekoppelte Filterausgangswert einen stärkeren Einfluss auf das Filterausgangssignal hat, als das Filtereingangssignal. Der Filterrückkopplungskoeffizient kann beispielsweise größer als das Zehnfache, als das Hundertfache, als das Tausendfache oder als das Zehntausendfache des Filtereingangskoeffizienten sein. Wenn der Filterrückkopplungskoeffizient mit dem Parameter a angegeben ist, kann der Filtereingangskoeffizient beispielsweise in Abhängigkeit von dem Filterrückkopplungskoeffizienten angegeben sein, z. B. Filtereingangskoeffizient = $1/(a+1)$. Mit einem beispielhaften Wert $a = 500$ ergibt sich somit ein Verhältnis zwischen Filterrückkopplungskoeffizient und Filtereingangskoeffizient von 25.500. Der Wert des Parameters a kann in Abhängigkeit von einer aktuell eingestellten Abtastrate (Polling Interval) eingestellt werden.

Gemäß einem Ausführungsbeispiel kann das Tiefpassfilter ausgebildet sein, eine gefilterte Signalstärkedifferenz aus einer Vielzahl von Einzelsignalstärkedifferenzen zu bestimmen. Die Vielzahl von Einzelsignalstärkedifferenzen können Signalstärkedifferenzen entsprechen, die sich innerhalb eines Referenz-Funksignalmusters aus der Vielzahl der Referenz-Funksignalmuster auf in dem Referenz-Funksignalmuster berücksichtigte Funksender beziehen. Ferner kann die Vielzahl der Einzelsignalstärkedifferenzen als Eingangsgrößen für das Tiefpassfilter dienen. Die Einzelsignalstärkedifferenzen können somit direkt weiterverwendet werden, da sich etwaige systematische Abweichungen ohnehin auf sämtliche Einzelsignalstärkedifferenzen auswirken dürften.

Ein Aspekt der hierin offenbarten technischen Lehre bezieht sich auf eine Positionsbestimmungsvorrichtung zur funkbasierten Ortung, die eine wie zuvor beschriebene Vorrichtung zur Kalibrierung und eine Einrichtung zum Empfangen von Funksignalen umfasst. Die Einrichtung zum Empfangen der Funksignale ist ausgebildet, einen von der Vorrichtung zur Kalibrierung generierten Kalibrierungswert zu empfangen und die Funksignale mittels des generierten Kalibrierungswerts zu skalieren, so dass von der Einrichtung zum Empfangen der Funksignale ausgegebene skalierte Funksignaldaten in Bezug auf eine Signalstärke im Wesentlichen Referenzsignaldaten entsprechen, mit denen die Funksignaldaten (mittels weiterer Funktionseinheiten der Positionsbestimmungsvorrichtung) verglichen werden. Die Positionsbestimmungsvorrichtung ist somit in der Lage, sich in regelmäßigen Abständen oder fortwährend zu kalibrieren. Die Fähigkeit zur (Selbst-)Kalibrierung kann insbesondere in solchen Situationen eine weiterhin zuverlässige Positionsbestimmung sicherstellen, in denen sich die Positionsbestimmungsvorrichtung in Gebieten mit geringer Abdeckung durch Funksender befindet. In derartigen Gebieten kommt nämlich der Bestimmung der Signalstärke von den Funksignalen der empfangbaren Funksender eine relativ wichtige Rolle für die Zwecke der Positionsbestimmung zu.

Gemäß einem Ausführungsbeispiel beruht die Funktionsweise der Positionsbestimmungsvorrichtung auf einem Fingerprinting-Prinzip. Mit dem Fingerprinting-Prinzip kann eine relativ genaue Positionsbestimmung erfolgen, insbesondere wenn neben den Senderkennungen der von der Positionsbestimmungsvorrichtung empfangbaren Funksendern auch relativ genaue Daten bezüglich der Signalstärken der von den Funksendern ausgesendeten Funksignale ermittelt werden können.

Die offenbarte technische Lehre bezieht sich auch auf ein Verfahren zum Kalibrieren einer auf funkbasierter Ortung basierenden Positionsbestimmungsvorrichtung, mit folgenden Schritten:

Vergleichen eines empfangenen Funksignalmusters mit einer Vielzahl von Referenz-Funksignalmustern;

Auswählen von Referenz-Funksignalmustern aus der Vielzahl von Referenz-Funksignalmustern in eine Auswahl-Untermenge mittels eines Übereinstimmungsmaßes zwischen dem empfangenen Funksignalmuster und jeweils einem Referenz-Funksignalmuster aus der Vielzahl der Referenz-Funksignalmuster;

Ermitteln einer Signalstärkedifferenz zwischen dem empfangenen Funksignalmuster und jeweils einem Referenz-Funksignalmuster der Auswahl-Untermenge; und

Ermitteln eines Kalibrationswerts für die Signalstärke und Bereitstellen des Kalibrationswerts zur Verwendung durch die Positionsbestimmungsvorrichtung.

Das empfangene Funksignalmuster umfasst zumindest eines von einer Senderkennung, eines empfaneenen Funksenders und einer Signalstärke eines empfangenen Funksignals. Das Vergleichen des empfangenen Funksignalmusters mit einer Vielzahl von Referenz-Funksignalmustern setzt relative Funksignalstärken für unterschiedliche Senderkennungen innerhalb des empfangenen Funksignalmusters mit entsprechenden Funksignalstärken innerhalb eines Referenzmusters in Bezug zueinander und schließt daraus auf das Übereinstimmungsmaß.

Die hierin offenbarte technische Lehre bezieht sich auch auf ein Computerprogramm zur Durchführung des erwähnten Verfahrens, wenn das Computerprogramm auf einem Prozessor oder Mikrocontroller abläuft.

Sowohl das Verfahren zum Kalibrieren als auch das Computerprogramm können durch zuvor erwähnte, auf die Vorrichtung zur Kalibrierung bezogene technische Merkmale näher spezifiziert werden.

Ausführungsbeispiele der vorliegenden Erfindung werden nachfolgend Bezug nehmend auf die beiliegenden Figuren näher erläutert. Es zeigen:

Fig. 1      eine schematische Darstellung zum Verständnis der Funktionsweise eines funkbasierten Ortungssystems;

Fig. 2      beispielhafte Signalstärken in Abhängigkeit von der Zeit bei einer aktuellen Position einer Positionsbestimmungsvorrichtung;

Fig. 3      eine graphische Darstellung von einem gemessenen Funksignalmuster und einem ähnlichen Referenz-Funksignalmuster;

Fig. 4      ein Übersichtsblockschaltbild von Elementen einer Positionsbestimmungsvorrichtung, die im Zusammenhang steht mit einer Kalibrierung gemäß der hierin offenbarten technischen Lehre;

Fig. 5      ein schematisches Blockschaltbild einer Ausführungsform der offenbarten technischen Lehre;

Fig. 6      ein schematisches Blockschaltbild eines weiteren Ausführungsbeispiels einer Vorrichtung zur Kalibrierung gemäß der offenbarten technischen Lehre;

Fig. 7      eine Draufsicht auf ein geographisches Gebiet, in welchem eine Positionsbestimmung durchgeführt werden kann;

Fig. 8      ein schematisches Blockschaltbild eines rekursiven Tiefpassfilters; und

Fig. 9      ein schematisches Blockschaltbild eines Teils der Vorrichtung zur Kalibrierung gemäß einem Ausführungsbeispiel.

Fig. 10     ein schematisches Flussdiagram eines Verfahrens zum Kalibrieren gemäß einem Ausführungsbeispiel der hierin offenbarten Lehre.

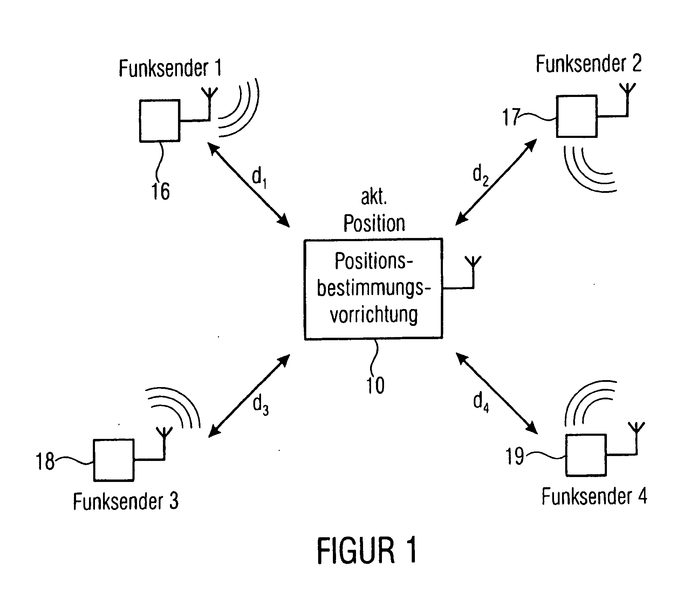

Fig. 1 soll das grundlegende Prinzip einer funkbasierten Ortung veranschaulichen. Eine Positionsbestimmungsvorrichtung 10 befindet sich zu einem gegebenen Zeitpunkt an einer aktuellen Position, welche bestimmt werden soll. Die Positionsbestimmungsvorrichtung 10 befindet sich innerhalb der Reichweite von vier Funksendern 16, 17, 18, und 19, so dass die Positionsbestimmungsvorrichtung 10 Funksignale von den Funksendern 16 bis 19 empfangen kann. Die Entfernung zwischen der Positionsbestimmungsvorrichtung 10 und den Funksendern 16 bis 19 beträgt jeweils $d_1$, $d_2$, $d_3$, bzw. $d_4$. Diese Entfernungen sind der Positionsbestimmungsvorrichtung jedoch nicht von vornherein bekannt.

Eine grobe Positionsbestimmung kann bereits anhand der Tatsache vorgenommen werden, dass sich die Positionsbestimmungsvorrichtung 10 innerhalb der Reichweiten der Funksender 16 bis 19 befindet. Zu diesem Zweck kennzeichnet jeder der Funksender 16 bis 19 die von ihm ausgesendeten Funksignale mit einer Senderkennung. Für eine genauere Positionsbestimmung kann die Tatsache genutzt werden, dass Funksignale in Abhängigkeit von der Entfernung schwächer werden. Aus der an der aktuellen Position vorherrschenden Signalstärke bzw. dem Signalpegel kann eine Entfernung zwischen dem entsprechenden Funksender und der aktuellen Position der Positionsbestimmungsvorrichtung 10 geschätzt werden. Mit dieser Information kann die Position beispielsweise mittels Interpolation bestimmt werden.

Eine mögliche Implementierung einer funkbasierten Ortung ist das so genannte Fingerprinting-Verfahren. Gemäß dem Fingerprinting-Prinzip werden die an der aktuellen Position von den Funksendern 16 bis 19 empfangenen Funksignale mit einer Vielzahl von Referenzpunkten verglichen, die vorab aufgenommen wurden. Derjenige Referenzpunkt, für den ausgewählte Eigenschaften (Funksenderidentifikation und ggf. Signalstärke) der empfangenen Funksignale am ähnlichsten sind, wird für die weitere Verarbeitung ausgewählt. Es kann angenommen werden, dass sich die Positionsbestimmungsvorrichtung 10 räumlich in der Nähe zu der Position befindet, an welcher der Referenzpunkt aufgenommen wurde und somit bekannt ist.

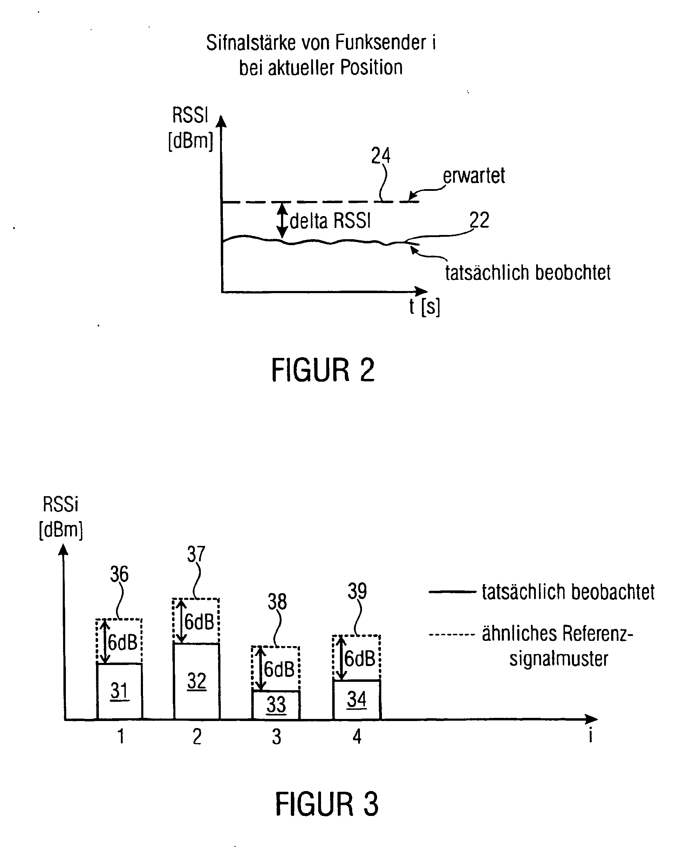

Fig. 2 zeigt auf beispielhafte Weise einen zeitlichen Verlauf einer tatsächlichen beobachteten Signalstärke 22. Die tatsächliche beobachtete Signalstärke 22 bezieht sich auf ein Funksignal eines Funksenders i und zwar so, wie sie bei der aktuellen Position von einer gegebenen Positionsbestimmungsvorrichtung 10 ermittelt wurde. Die Signalstärke ist auf der Ordinate des in Fig. 2 dargestellten Graphen aufgetragen und mit RSSI (Received Signal Strength Indicator) bezeichnet. Die tatsächlich beobachtete Signalstärke 22 ist im Wesentlichen konstant und schwankt nur geringfügig um einen Langzeitmittelwert.

Als gestrichelte Linie ist in Fig. 2 auch ein zeitlicher Verlauf einer erwarteten Signalstärke 24 aufgezeichnet. Die erwartete Signalstärke 24 wurde beispielsweise während einer Trainings- bzw. Einlernphase des funkbasierten Ortungssystems ermittelt. Die während der Trainingsphase verwendete Positionsbestimmungsvorrichtung kann unterschiedlich sein zu jener, die während einer Nutzungsphase verwendet wird. Aus diesem Unterschied heraus erklärt sich, dass die erwartete Signalstärke 24 von der tatsächlich beobachteten Signalstärke 22 abweicht. Allerdings ist die Abweichung deltaRSSI im Wesentlichen konstant über der Zeit. Die Positionsbestimmungsvorrichtung 10 kann ohne weitere Maßnahmen nicht feststellen, welcher Anteil an der Abweichung deltaRSSI auf die Entfernung zwischen dem Funksender 16 und der Positionsbestimmungsvorrichtung 10 entfällt, und welcher Anteil auf eine systematische Abweichung entfällt, z. B. aufgrund der Verwendung von Antennen unterschiedlicher Qualität während der Trainingsphase einerseits und der späteren Nutzphase andererseits.

Fig. 3 zeigt die von der Positionsbestimmungsvorrichtung 10 an der aktuellen Position tatsächlich beobachteten Signalstärken 31, 32, 33 und 34 in Abhängigkeit von einem Index i, der angibt, um welchen Funksender es sich handelt. Die in Abhängigkeit des jeweiligen Funksenders bzw. einer von dem Funksender gelieferten Senderkennung aufgetragenen Signalstärken können als ein Beispiel dafür angesehen werden, wie ein Funksignalmuster beschaffen sein kann. Fig. 3 zeigt auch ein ähnliches Referenz-Signalmuster, das sich in analoger Weise aus Referenzsignalstärken 36, 37, 38 und 39 ergibt. Das ähnliche Referenz-Signalmuster ist in gestrichelter Linie dargestellt. Die Ähnlichkeit zwischen dem empfangenen Funksignalmuster und dem ähnlichen Referenz-Signalmuster ergibt sich in dem in Fig. 3 dargestellten Beispiel daraus, dass der Unterschied der Signalstärken jeweils 6 dB beträgt. Als Übereinstimmungsmaß kann daher z. B. die Streuung der Signalstärkedifferenz über dem Index i für die Funksender angegeben werden. Da es in praktischen Anwendungen der Positionsbestimmungsvorrichtung typischerweise eine große Anzahl von Referenz-Funksignalmusters geben wird, geht es im Rahmen der Kalibrierung darum, eine Auswahl aus der Menge der Referenz-Funksignalmuster zu treffen, die im Sinne des Übereinstimmungsmaßes ähnlich zu dem empfangenen Funksignalmuster sind. Diese Auswahl sollte indifferent gegenüber absoluten Signalstärken des empfangenen Funksignalmusters sein, d. h. es ist typischerweise irrelevant, ob die Abweichung wie in Fig. 3 dargestellt, konstant 6 dB beträgt, oder ob die Abweichung konstant 8 dB beträgt. Es kommt typischerweise lediglich darauf an, dass die Abweichung im Wesentlichen gleich für alle Funksender i ist, d.h. eine geringe Streuung aufweist.

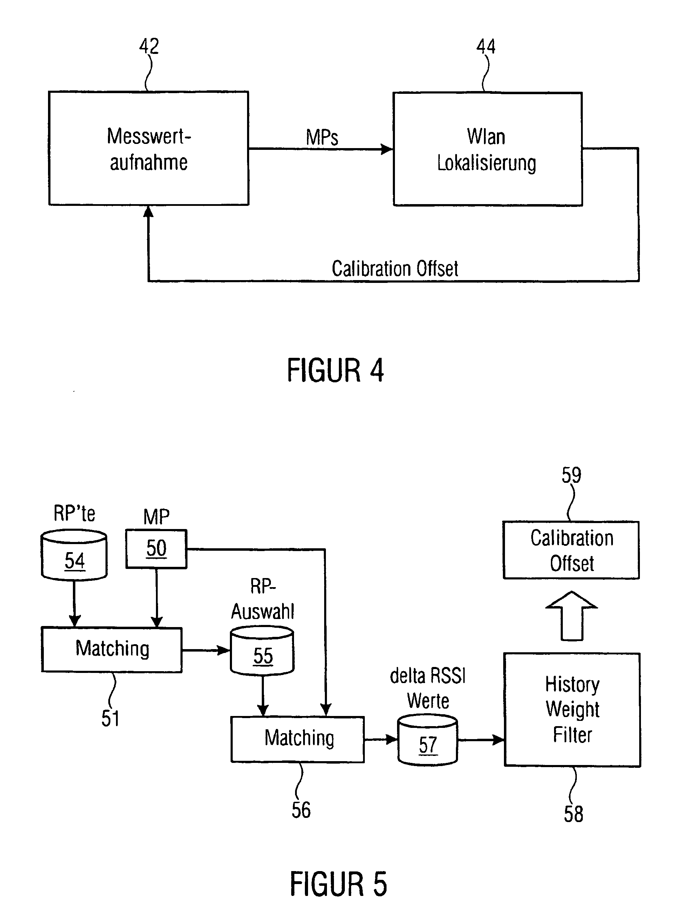

Fig. 4 zeigt, wie die Kalibrierung innerhalb der Positionsbestimmungsvorrichtung 10 verwendet werden kann. Eine nach dem Fingerprinting-Prinzip arbeitende Positionsbestimmungsvorrichtung 10 umfasst typischerweise eine Messwertaufnahme 42, die unter anderem die Funktion eines Funksignalempfängers wahrnimmt. Somit werden empfangene Funksignale in geeigneter Weise aufbereitet (Verstärkung, Demodulation, etc.). Des Weiteren bestimmt die Messwertaufnahme 42 auch die Signalstärke der empfangenen Funksignale. Die Messwertaufnahme 42 gibt sogenannte Messpakete oder "Measurement Packs" (MP) aus, welche von einem WLAN-Lokalisierungsmodul 44 weiterverwendet werden. Das WLAN-Lokalisierungsmodul 44 gleicht typischerweise die empfangenen Senderkennungen mit einer Datenbank ab und bestimmt anhand der von der Messwertaufnahme 42 bereitgestellten Signalstärken eine Position der Positionsbestimmungsvorrichtung. In dem in Fig. 4 dargestellten Blockschaltbild ist die Vorrichtung zur Kalibrierung in das WLAN-Lokalisierungsmodul 44 integriert. Somit liefert das WLAN-Lokalisierungsmodul 44 eine Kalibrationsabweichung ("Calibration Offset"), welche an die Messwertaufnahme 42 zurückgegeben wird. Die Messwertaufnahme 42 verwendet die Kalibrationsabweichung dazu, die von ihr ermittelten Signalstärken entsprechend zu korrigieren, was typischerweise sich günstig auf die Funktion der Messwertaufnahme 42 auswirkt.

Fig. 5 zeigt ein schematisches Blockschaltbild einer Vorrichtung zur Kalibrierung gemäß der offenbarten Lehre. Die Vorrichtung zur Kalibrierung erhält beispielsweise von der Messwertaufnahme 42 ein Messpaket 50 oder alternativ kann die Vorrichtung zur Kalibrierung ausgebildet sein, das Messpaket 50 selbstständig zu bestimmen. Die Vorrichtung zur Kalibrierung hat auch Zugriff auf eine Speichereinrichtung oder Datenbank, welche Referenzpakete 54 (RP'te) enthält. Das empfangene Messpaket 50, welches ein kürzlich empfangenes Funksignalmuster wiederspiegelt, und die Referenzpakete 54 werden einer Einrichtung zum Vergleichen 51 zugeführt. Die Einrichtung zum Vergleichen 51 hat typischerweise die Aufgabe, die Vielzahl der Referenzpakete 54 mit dem empfangenen Messpaket 50 zu vergleichen, wobei jedoch Unterschiede zwischen den Referenzpaketen 54 und dem empfangenen Messpaket 50, die auf systematische, konstante und/oder quasi-konstante Abweichungen zurückzuführen sind, von der Einrichtung zum Vergleichen 51 typischerweise (und soweit realisierbar) unberücksichtigt bleiben. Als Ausgabe liefert die Vorrichtung zum Vergleichen 51 eine Referenzpaketauswahl 55, in der solche Referenzpakete berücksichtigt sind, die unabhängig von den genannten systematischen, konstanten und/oder quasi-konstanten Abweichungen ähnlich zu dem empfangenen Funksignalmuster in dem empfangenen Messpaket 50 sind. Eine derartige Ähnlichkeit kann in der Regel derart interpretiert werden, dass die in den ausgewählten Referenzpaketen der Referenzpaketauswahl 55 enthaltenen Referenz-Funksignalmuster an Positionen aufgenommen wurden, die in räumlicher Nähe zu der aktuellen Position sind, auf welche sich das empfangene Funksignalmuster des empfangenen Messpakets 50 bezieht.

Wenn die Referenzpaketauswahl 55 komplett ist, wird sie einer Einrichtung zum Ermitteln einer Signalstärkedifferenz 56 ("Matching") zugeführt. Die Einrichtung zum Ermitteln der Signalstärkedifferenz 56 umfasst auch einen Eingang für das aktuelle Messpaket 50. Die Einrichtung zum Ermitteln der Signalstärkedifferenz 56 ermittelt typischerweise eine Signalstärkedifferenz pro Referenzpaket in der Referenzpaketauswahl 55. Die ermittelten Signalstärkedifferenzen ("deltaRSSI Werte") werden in einer Datenstruktur oder einen Datenbank 57 gespeichert. Von dort werden sie einem Vergangenheitsgewichtungsfilter 58 ("History Weight Filter") zugeführt. Dadurch kann erreicht werden, dass sich solche Abweichungen zwischen den Referenzpaketen und dem empfangenen Messpaket durchsetzen, die im statistischen Mittel in einer großen Anzahl von Paaren aus Referenzpaketen 54 und Messpaketen 50 auftreten. Das Vergangenheitsgewichtungsfilter 58 gibt einen Kalibrierungswert 59 ("Calibration Offset") aus, der an die Messwertaufnahme 42 zurückgekoppelt wird (Fig. 4).

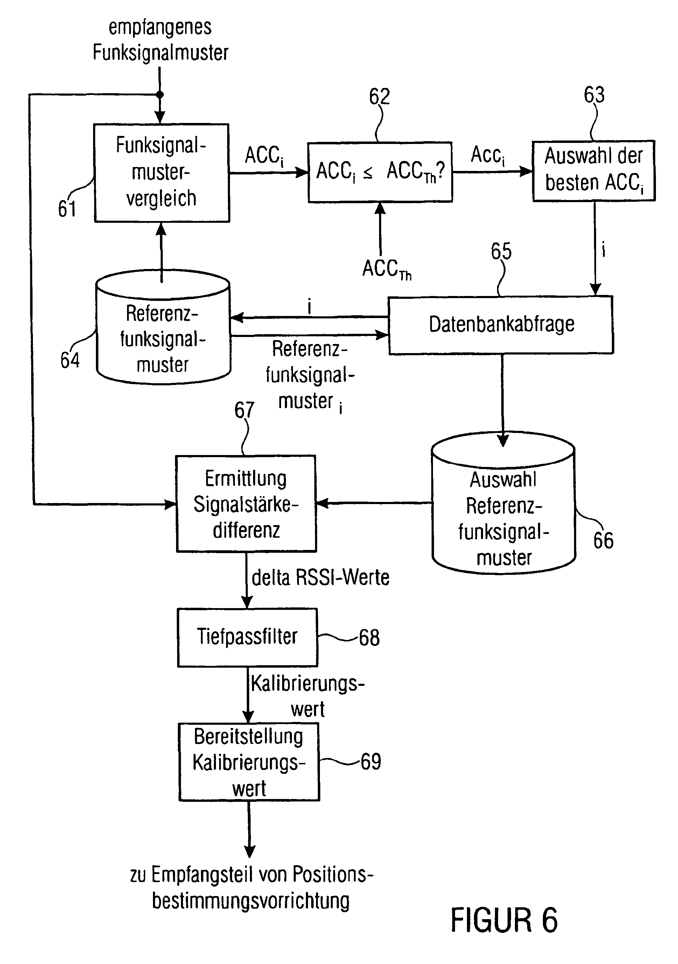

Fig. 6 zeigt ein etwas detaillierteres, schematisches Blockschaltbild einer Vorrichtung zur Kalibrierung gemäß einem Ausführungsbeispiel der offenbarten Lehre. Ein empfangenes Funksignalmuster wird einer Einrichtung zum Funksignalmustervergleich 61 zugeführt.

Als weitere Eingangsgröße für die Einrichtung zum Funksignalmustervergleich 61 dient jeweils ein Referenz-Funksignalmuster aus einer Vielzahl von Referenz-Funksignalmustern 64. Man beachte, dass ein bestimmtes empfangenes Funksignalmuster typischerweise mit einer Vielzahl oder sogar allen der Referenz-Funksignalmuster 64 mittels der Einrichtung 61 verglichen wird. Um den für den Funksignalmustervergleich erforderlichen Rechenaufwand und die entsprechende erforderliche Zeit zu begrenzen, kann innerhalb der Vielzahl von Referenz-Funksignalmustern 64 eine sinnvolle Vorauswahl getroffen werden, beispielsweise auf der Grundlage von den zuletzt bestimmten Positionen, da eine räumliche Nähe zwischen den zuletzt bestimmten Positionen und der aktuellen Position wahrscheinlich ist. Die Einrichtung zum Funksignalmustervergleich 61 gibt jeweils ein Übereinstimmungsmaß $ACC_i$ für je ein Vergleichspaar (empfangenes Funksignalmuster gegenüber einem Referenz-Funksignalmuster) aus. Das ermittelte Übereinstimmungsmaß $ACC_i$ wird durch einen Funktionsblock 62 zunächst mit einem absoluten Schwellenwert $ACC_{Th}$ verglichen. Wenn das ermittelte Übereinstimmungsmaß $ACC_i$ größer ist als der absolute Schwellenwert $ACC_{Th}$, besteht keine ausreichende Übereinstimmung zwischen dem empfangenen Funksignalmuster und dem Referenz-Funksignalmuster. Dieses Vergleichspaar wird somit verworfen. Wenn dagegen das Übereinstimmungsmaß die Bedingung $ACC_i \leq ACC_{Th}$ erfüllt, wird das Übereinstimmungsmaß $ACC_i$ an einen Auswahlfunktionsblock 63 weitergegeben, welcher den besten Wert des Übereinstimmungsmaßes $ACC_i$ bestimmt, oder auch eine Menge der besten Übereinstimmungsmaßwerte. In dem Fall, der in Fig. 6 dargestellt ist, entsprechen geringe Werte des Übereinstimmungsmaßes $ACC_i$ guten Übereinstimmungen zwischen dem empfangenen Funksignalmuster und dem jeweiligen Referenz-Funksignalmuster, wohingegen hohe Werte für das Übereinstimmungsmaß $ACC_i$ schlechtere Übereinstimmungen widerspiegeln. Dies ist letztlich eine Frage der Definition des Übereinstimmungsmaßes und hat keine grundlegenden Auswirkungen auf die offenbarte Lehre. Die für das Übereinstimmungsmaß verwendete Abkürzung ACC ergibt sich aus dem englischen Wort "Accuracy". Der Auswahlfunktionsblock 63 gibt je nach Implementierung und Konfiguration einen Index oder mehrere Indizes aus, die sich auf den bzw. die am besten mit dem empfangenen Funksignalmuster übereinstimmenden Referenz-Funksignalmuster beziehen. Der Index i oder die Indizes i werden an eine Datenbankabfrage 65 weitergegeben, welche diese zur Abfrage der Datenbank mit dem Referenz-Funksignalmustern 64 verwendet. Die Datenbank 64 gibt daraufhin die entsprechenden Referenz-Funksignalmuster zurück und die Einrichtung zur Datenbankabfrage 65 fügt diese in eine Datenstruktur oder weitere Datenbank 66 ein, die eine Auswahl der Referenz-Funksignalmuster enthält.

Fig. 6 beschreibt eine fortlaufende Auswahl der Referenz-Funksignalmuster, bei der sich ständig ändern kann, welches der Referenz-Funksignalmuster derzeit das beste Übereinstimmungsmaß aufweist. Alternativ ist auch denkbar, dass für jedes Messpaket (MP), das von der Positionsbestimmungsvorrichtung ermittelt wird, die Übereinstimmungsmaße für sämtliche (oder zumindest einige) der in der Datenbank 64 vorhandenen Referenz-Funksignalmuster in einem Durchgang bestimmt werden. Danach werden die Referenz-Funksignalmuster gemäß ihren Übereinstimmungsmaßen ausgewertet, so dass das/die am besten übereinstimmende(n) Referenz-Funksignalmuster bestimmt werden können.

Sowohl das empfangene Funksignalmuster als auch die in der Auswahl der Referenz-Funksignalmuster 66 enthaltenen Referenz-Funksignalmuster werden als Eingangsgrößen für eine Einrichtung zur Ermittlung der Signalstärkedifferenz 67 verwendet. Wie bereits im Zusammenhang mit Fig. 5 erwähnt, wird jeweils eine Signalstärkedifferenz je Vergleichspaar, bestehend aus dem empfangenen Funksignalmuster und einem Referenz-Funksignalmuster der Auswahl 66, ermittelt. Somit gibt die Einrichtung zur Ermittlung der Signalstärkedifferenz 67 eine Vielzahl von Signalstärkedifferenzwerten (deltaRSSI Werte) aus. Die ausgegebenen Signalstärkedifferenzen werden in der Reihenfolge ihrer Berechnung einem Tiefpassfilter 68 zugeführt. Das Tiefpassfilter 68 bestimmt einen Kalibrierungswert, der im Großen und Ganzen einer konstanten Abweichung entspricht, die in einer großen Anzahl von Vergleichspaaren zwischen dem empfangenen Funksignalmuster und den ausgewählten Referenz-Funksignalmustern festgestellt werden konnte. Der Kalibrierungswert wird dann von einer Einrichtung zur Bereitstellung des Kalibrierungswerts 69 aufgenommen, von wo er dem Empfangsteil der Positionsbestimmungsvorrichtung zur Verfügung gestellt wird bzw. durch diese abrufbar ist.

Das Übereinstimmungsmaß ACC kann auf die folgende Weise ermittelt werden, die in der deutschen Offenlegungsschrift DE 10 2008 036 681 A1 beschrieben ist. Die Funksignale bzw. die den Funksignalen zugeordneten Funksender können getrennt bzw. gefiltert werden in eine erste Anzahl $N_{eq}$ von Funksendern, von denen vorher aufgezeichnete Senderkennungen an der Referenzposition mit an der aktuellen Position gelieferten Senderkennungen identisch sind, und in eine zweite Anzahl $N_{neq}$ von Funksendern, von denen vorher aufgezeichnete Senderkennungen an der Referenzposition und an der Position gelieferte Senderkennungen verschieden sind, also von Funksendern, deren Senderkennungen entweder nur an der aktuellen Position geliefert werden und vorher an der Referenzposition nicht aufgezeichnet wurden, oder, deren Senderkennungen vorher nur an der Referenzpositiön aufgezeichnet wurden und nicht an der aktuellen Position geliefert werden. Ein Unterschritt kann vorhanden sein, um aus der zweiten Anzahl $N_{neq}$ von Funksendern eine Anzahl $N_{nh}$ ("not heard" = "nicht gehört") von an der aktuellen Position zuwenig empfangenen Funksendern auszuwählen, d.h. von Funksender, von denen vorher aufgezeichnete Eigenschaften an der Referenzposition vorhanden sind, von denen jedoch keine an der aktuellen Position gelieferte Eigenschaften vorhanden sind. Je höher die Anzahl $N_{nh}$ der an der aktuellen Position zuwenig empfangenen Funksender ausfällt, desto wahrscheinlicher ist es, dass die aktuelle Position nicht der Referenzposition entspricht. Ferner kann ein weiterer Unterschritt vorgesehen sein, bei dem aus der zweiten Anzahl $N_{neq}$ von Funksendern eine Anzahl $N_{htm}$ ("heard too much" = "zuviel gehört") von an der aktuellen Position zuviel empfangenen Funksendern ausgewählt werden, von denen keine vorher aufgezeichnete elektromagnetische Eigenschaften an der Referenzposition vorhanden sind, von denen jedoch an der aktuellen Position gelieferte elektromagnetische Eigenschaften vorhanden sind. Je höher die Anzahl $N_{htm}$ der an der aktuellen Position zuviel empfangenen Funksender ausfällt, desto wahrscheinlicher ist es, dass die aktuelle Position nicht der Referenzposition entspricht. Die zweite Anzahl $N_{neq}$ von Funksendern ergibt sich also aus der Anzahl $N_{nh}$ von an der aktuellen Position zuwenig empfangenen Funksendern und der Anzahl $N_{htm}$ von an der aktuellen Position zuviel empfangenen Funksendern gemäß $N_{neq} = (N_{nh} + N_{htm})$.

Basierend auf den gelieferten Eigenschaften der Funksignale wird in einem dritten Schritt das Übereinstimmungsmaß bzw. ein Distanzwert ACC für die aktuelle Position ermittelt, wobei sowohl Eigenschaften der ersten Anzahl $N_{eq}$ von Funksendern als auch Eigenschaften der zweiten Anzahl $N_{neq}$ von Funksendern bei der Bestimmung des Übereinstimmungsmaßes berücksichtigt werden, und wobei die Eigenschaften der ersten Anzahl $N_{eq}$ der Funksender und die Eigenschaften der zweiten Anzahl $N_{neq}$ der Funksender unterschiedlich in das Übereinstimmungsmaß eingehen. Gemäß Ausführungsbeispielen werden die Eigenschaften der ersten Anzahl $N_{eq}$ der Funksender höher gewichtet als die Eigenschaften der zweiten Anzahl $N_{neq}$ der Funksender, worauf im Nachfolgenden noch näher eingegangen wird.

Der des Ermittelns bzw. Lieferns der Eigenschaften von Funksignalen wird von einem mobilen Endgerät bzw. einem Client durchgeführt, wie beispielsweise einem WLANfähigen PDA, einem Bluetooth-fähigen PDA oder z.B. auch einem Mobiltelefon. Dazu weist der Client eine Einrichtung zum Ermitteln bzw. Liefern der Eigenschaften der Funksignale der fest positionierten Funksender auf, wobei die Eigenschaften im Allgemeinen gekennzeichnet sind durch eine Kennung eines fest positionierten Funksenders und dessen elektromagnetische Signalcharakteristik, wie beispielsweise eine Empfangsfeldstärke, ein Empfangsspektrum oder ein empfangener Signalrauschabstand.

Die Kennung bzw. ein identifizierendes Merkmal eines fest positionierten Funksenders kann beispielsweise seine MAC-Adresse (MAC = Media Access Control), Basisstationskennung oder eine Zellkennung sein.

Unter den Eigenschaften der Funksignale können die vorher beschriebenen Messpakete MP(i) verstanden werden. Die ermittelten bzw. gelieferten Eigenschaften MP(i) werden an eine Einrichtung 34 zum Trennen der Funksignale bzw. ihrer zugeordneten Funksender in eine erste Anzahl $N_{eq}$ von Funksendern und eine zweite Anzahl $N_{neq}$ von Funksendern geliefert. Dabei umfasst die erste Anzahl $N_{eq}$ von Funksendern diejenigen Funksender, von denen vorher aufgezeichnete Senderkennungen an der betrachteten Referenzposition mit an der aktuellen Position ermittelten Senderkennungen identisch sind. Die zweite Anzahl $N_{neq} = (N_{nh} + N_{htm})$ von Funksendern umfasst diejenigen Funksender, deren Senderkennungen entweder nur an der Position geliefert werden und vorher an der Referenzposition nicht aufgezeichnet wurden, oder, deren Senderkennungen vorher nur an der Referenzposition aufgezeichnet wurden und nicht an der Position geliefert werden. Die Funksignale werden also in wenigstens zwei Gruppen aufgeteilt. Eine erste Gruppe umfasst Eigenschaften von Funksignalen der ersten Anzahl $N_{eq}$ von Funksendern, wohingegen eine zweite Gruppe Eigenschaften von Funksignalen der zweiten Anzahl $N_{neq}$ von Funksendern umfasst. Wie vorhin schon beschrieben wurde, kann die zweite Gruppe noch unterteilt werden in eine Gruppe von Eigenschaften von Funksignalen von an der aktuellen Position zu wenig empfangenen Funksendern und in eine Gruppe von Eigenschaften von Funksignalen von an der Position zu viel empfangenen Funksendern. Die Eigenschaften der ersten Anzahl $N_{eq}$ von Funksendern und die Eigenschaften der zweiten Anzahl $N_{neq}$ von Funksendern können unterschiedlich in das Übereinstimmungsmaß eingehen, d.h. unterschiedlich gewichtet werden.

An jedem Ort bzw. jeder Position werden, soweit empfangbar, Signale mehrerer Basisstationen bzw. Funksender mit unterschiedlicher Signalstärke zusammen mit den zugehörigen Senderkennungen geliefert. Im Falle von WLAN-Netzen umfasst ein derartigen elektronischer Fingerabdruck eine Liste von für jedes WLAN-Gerät bzw. WLAN-Funksendern eindeutigen MAC-Adressen und den dazu gehörigen Empfangssignalstärken und charakterisiert damit die aktuelle Position. Wo die WLAN-Funksender stehen, spielt keine Rolle.

Nun werden Differenzen zwischen den vorher aufgezeichneten elektromagnetischen Eigenschaften an der Referenzposition und den an der aktuellen Position gelieferten elektromagnetischen Eigenschaften der ersten Anzahl

$N_{eq}$ von Funksendern gebildet. Beispielsweise werden Differenzen von RSSI-Werten von Funksendern gebildet, von denen vorher aufgezeichnete Senderkennungen an der Referenzposition mit an der aktuellen Position gelieferten Senderkennungen identisch sind. Diese Differenz-RSSI-Werte $\Delta RSSI_l$ bis $\Delta RSSI_{Neq}$ zu einer Summe $\sum \Delta RSSI_n$ aufsummiert. $N_{eq}$ ist die erste Anzahl der Funksender, die sowohl im Messpaket als auch im Referenzpaket vorkommen. Die Funktion $\Delta RSSI$ berechnet eine Distanz zwischen zwei Signalstärkewerten. Als Distanzfunktion kann beispielsweise der euklidische Abstand der Messwerte in dB gewählt werden. Distanz heißt in diesem Zusammenhang also nicht räumlicher Abstand, sondern mathematische Abweichung. Nach der Summation wird die Summe $\sum \Delta RSSI_n$ mit einem Gewichtungsfaktor EQW gewichtet, d.h. $EQW \cdot \sum \Delta RSSI_n$. EQW definiert dabei ein Gewicht zwischen 0 und 1, das angibt, wie stark die Distanz der Messwerte bzw. die Distanz der Signalstärkewerte $\sum \Delta RSSI_n$ im Vergleich zu den an der aktuellen Position gegenüber den zuviel oder zuwenig gehörten Funksendern gewertet werden soll.

Würde man an dieser Stelle mit der Berechnung des Überein-stimmungsmaßes aufhören, so wäre es möglich, dass eigentlich schlechter zu der aktuellen Position passende Referenzpositionen als Kandidaten ausgewählt würden als besser passende. Dafür ein Beispiel: Angenommen, für einen ersten Referenzpunkt ergibt sich im Vergleich zu der aktuellen Position $N_{eq} = 1$, d.h. lediglich eine Funksendersenderkennung zwischen Referenzmesspaket und aktuellem Messpaket stimmt überein. Liegen die entsprechenden RSSI-Werte der übereinstimmenden Messpakete nun beispielsweise zufällig 2,5 dB auseinander, so ergibt sich $\sum \Delta RSSI_l / N_{eq} = 2{,}5$ dB. Weiter angenommen, für einen zweiten Referenzpunkt ergibt sich im Vergleich zu der aktuellen Position $N_{eq} = 3$, d.h. drei Funksendersenderkennungen stimmen zwischen Referenzmesspaket und aktuellem Messpaket überein. Liegen die entsprechenden RSSI-Werte nun beispielsweise 2 dB, 3 dB und 4 dB auseinander, so ergibt sich insgesamt $\sum \Delta RSSIn / N_{eq} = 3$ dB. In der Folge würde der zweite Referenzpunkt schlechter bewertet werden als der erste, was zu einem Schätzfehler führten würde. Durch das zuvor beschriebene Schema können derartige Schätzfehler vermieden bzw. wenigstens reduziert werden.

Für jede der zuwenig empfangenen Funksender kann eine Malusfunktion bzw. ein Maluswert $M_{nh;m}()$ ($m=1,...,N_{nh}$) definiert werden. Das heißt, für jede Station, die in den Referenzwerten vorhanden ist, jedoch nicht in den aktuellen Messwerten, kann ein Maluswert $M_{nh,m}()$ ($m=1,...,N_{nh}$) definiert werden. Dieser kann beispielsweise davon abhängen, wie zuverlässig die entsprechend zuwenig empfangene Station in der Vergangenheit an der Referenzposition empfangbar war. Bei einer bisher guten Empfangbarkeit der zuwenig empfangenen Station, d.h. hoher RSSI-Wert, resultiert beispielsweise ein hoher Maluswert. Der Maluswert $M_{nh,m}()$ ($m=1,...,N_{nh}$) kann also direkt proportional zum Referenz-RSSI-Wert der an der aktuellen Position zuwenig empfangenen Station sein. Des Weiteren kann die Malusfunktion $M_{nh,m}()$ ($m=1,...,N_{nh}$) mit einem PGS-Wert des entsprechenden zuwenig empfangenen Funksenders verknüpft sein. Ein kleiner PGS-Wert in der Referenzdatenbasis kann beispielsweise auch nur zu einem kleinen Wert der entsprechenden Malusfunktion $M_{nh,m}()$ führen. Dies kann z.B. durch die folgende Formel errechnet werden:

$$M_{nh,m}(PGS) = FixMalus + DynamicMalus,$$

wobei DynamicMalus$= FixMalus * PGS/100$. Die Funktion $M_{nh,m}()$ ($m=1,...,N_{nh}$) für einen Maluswert für einen zuwenig empfangenen Funksender ist also gemäß Ausführungsbeispielen abhängig von einer mit einer Empfangsfeldstärke in Beziehung stehenden vorher am Referenzpunkt aufgezeichneten Eigenschaft, sowie von Modellen, beispielsweise für die Umgebung, der Güte der Messwerte etc.. Die $N_{nh}$ Maluswerte $M_{nh,m}()$ ($m=1,...,N_{nh}$) für die an der aktuellen Position zuwenig empfangenen Funksender werden weiterverarbeitet, um eine erste Summe $\sum M_{nh,m}()$ der $N_{nh}$ Maluswerte der zuwenig empfangenen Funksender zu bestimmen.

Eigenschaften von Funksignalen von einer Anzahl $N_{htm}$ von an der aktuellen Position zuviel empfangenen Funksendern sind Funksendern zugeordnet, von denen keine vorher aufgezeichneten elektromagnetischen Eigenschaften an der Referenzposition vorhanden sind, von denen jedoch an der aktuellen Position gelieferte elektromagnetische Eigenschaften vorhanden sind. Jedem der an der aktuellen Position zuviel empfangenen Funksender kann eine Malusfunktion $M_{htm,r}()$ ($r=1,...,N_{htm}$) bzw. ein Maluswert zugeordnet werden. Das heißt, für jeden Funksender, der in den Referenzwerten fehlt, jedoch in den aktuell gemessenen Messwerten enthalten ist, kann ein Maluswert $M_{htm,r}()$ ($r=1,...,N_{htm}$) defi-niert werden. Auch hier kann die Funktion für den Maluswert $M_{htm,r}()$ ($r=1,...,N_{htm}$) abhängig vom aktuellen RSSI-Messwert des Funksenders, sowie von Modellen, beispielsweise für die Umgebung, der Güte der Messwerte, dem Alter der Referenzdaten etc., sein. Einem der an der aktuellen Position zuviel empfangenen Funksender kann ein Maluswert $M_{htm}()$ ($r=1,...,N_{htm}$) abhängig von einer zu der Empfangsfeldstärke seines Funksignals in Beziehung stehenden Eigenschaft, beispielsweise dem RSSI-Wert, zugeordnet werden. Der Maluswert $M_{htm,r}()$ ($r=1,...,N_{htm}$) ist also in der Regel direkt proportional zum Referenz-RSSI-Wert der an der aktuellen Position zuviel empfangenen Station. Des Weiteren kann die Malusfunktion $M_{htm,r}()$ ($r=1,...,N_{htm}$) mit einem PGS-Wert des entsprechenden zuviel empfangenen Funksenders verknüpft sein. Ein kleiner PGS-Wert in der Referenzdatenbasis kann beispielsweise auch nur zu einem kleinen Wert der entsprechenden Malusfunktion $M_{htm,r}()$ ($r=1,...,N_{hm}$) führen. Die $N_{htm}$ Maluswerte der zuviel empfangenen Funksender werden zu einer zweiten Summe $\sum M_{htm,r}()$ aufsummiert.

Die erste Summe $\sum M_{nh,m}()$ der Maluswerte der zuwenig empfangenen Funksender und die zweite Summe $\sum M_{htm,r}()$ der zuviel empfangenen Funksender werden gemäß Ausführungsbeispielen aufsummiert und mit einem Gewichtungsfaktor (1 - EQW) gewichtet, d.h. $(1 - EQW)\cdot(\sum M_{nh,m}() + \sum M_{htm,r}())$.

Schließlich werden die gewichtete Summe $EQW\cdot\sum\Delta RSSI_n$ der Differenzen zwischen vorher aufgezeichneten elektromagnetischen Eigenschaften an der Referenzposition und den an der Position gelieferten elektromagnetischen Eigenschaften der ersten Anzahl $N_{eq}$ von Funksendern und die gewichtete Summe $(1 - EQW)\cdot(\sum M_{nh,m}() + \sum M_{htm,r}())$ der Maluswerte aufsummiert und mit $(N_{eq} + N_{nh} + N_{htm})$ normiert, um den Distanzwert ACC zwischen der aktuellen Position und der betrachteten Referenzposition zu erhalten. Der Distanzwert ACC berechnet sich also beispielsweise gemäß

$$ACC = \frac{EQW \cdot \sum_{n=1}^{Neq} \Delta RSSI_n(\ ) + (1 - EQW) \cdot \left( \sum_{m=1}^{N_{nh}} M_{nh,m}(\ ) + \sum_{r=1}^{N_{HTM}} M_{htm,r}(\ ) \right)}{N_{eq} + N_{nh} + N_{htm}} \quad .(1)$$

Wird der Distanzwert ACC gemäß G1. (1) bestimmt, so ist eine Übereinstimmung zwischen der aktuellen Position und der betrachteten Referenzposition umso größer, je kleiner der Distanzwert ACC ist. Das heißt, die Übereinstimmung ist umso größer, je kleiner die Summe $\sum\Delta RSSI_n$ der Differenzen ist und je kleiner die Summen $\sum M_{nh,m}()$, $\sum M_{htm,r}()$ der Maluswerte sind.

Das Übereinstimmungsmaß könnte gemäß anderen Ausführungsbeispielen auch invers zu dem Distanzwert ACC sein, oder es könnte sich gemäß (1-ACC) berechnen lassen, falls ACC nicht größer als 1 werden kann. D.h., je kleiner die Distanz ACC, desto größer das Übereinstimmungsmaß. Natürlich sind auch andere Berechnungsvorschriften denkbar, bei denen die Eigenschaften der ersten Anzahl $N_{eq}$ von Funksendern und die Eigenschaften der zweiten Anzahl $N_{neq} = (N_{nh} + N_{htm})$ von Funksendern unterschiedlich in das Übereinstimmungsmaß eingehen.

Nach der soeben beschriebenen Berechnungsmethode für den Distanzwert ACC erhöht jede zuviel oder zuwenig empfangene Station die Distanz ACC. Die Behandlung unterschiedlicher Stationen im Fingerabdruck und in aktuellen Messwerten beeinflusst die Genauigkeit stark: eine Station, die im gespeicherten Referenz-Fingerabdruck fehlt, doch in der aktuellen Messung auftaucht, ist ein starkes Indiz dafür, dass dieser Fingerabdruck nicht passt.

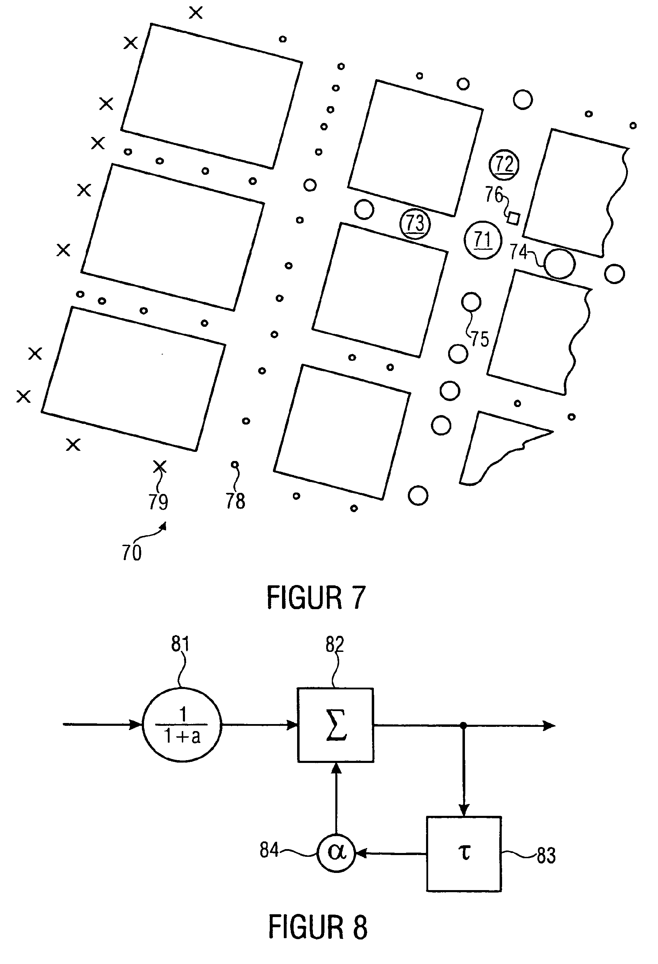

Fig. 7 zeigt einen Grundriss eines geographischen Gebiets 70 wie eines Stadtviertels oder einer Messehalle mit Messeständen und dazwischenliegenden Gängen. Die Positionsbestimmungsvorrichtung 10 befindet sich an einer aktuellen Position 76. Für eine Vielzahl von Positionen innerhalb des geographischen Gebiets 70 wurden Referenzdatensätze aufgezeichnet, die in Fig. 7 entweder als Kreis oder als Kreuz dargestellt sind. Die als Kreuz dargestellten Referenzpositionen 79 sind zu weit von der aktuellen Position 76 der Positionsbestimmungsvorrichtung 10 entfernt, so dass keine Übereinstimmung bei den an diesen beiden Positionen empfangbaren Funksendern besteht (oder nur eine kleine Übereinstimmung). An den als Kreis dargestellten Referenzpositionen 78 ist zumindest eine grundlegende Übereinstimmung zwischen dem an der aktuellen Position 76 empfangenen Funksignalmuster und dem für die jeweilige Referenzposition aufgezeichneten Referenz-Funksignalmuster gegeben. Eine derartige grundlegende Übereinstimmung kann dadurch gegeben sein, dass eine ausreichende Übereinstimmung bei den an den beiden Positionen empfangbaren Funksendern besteht. Darüber hinaus ist in Fig. 7 auch das Übereinstimmungsmaß zwischen dem empfangenen Funksignalmuster an der aktuellen Position 76 und den Referenz-Funksignalmustern an den jeweiligen Referenzpositionen dargestellt. Ein kleiner Kreis an der jeweiligen Referenzposition bedeutet, dass nur eine geringe Übereinstimmung vorliegt. Dagegen bedeutet ein großer Kreis, dass eine hohe Übereinstimmung vorliegt.

Die in der Nähe der aktuellen Position 76 befindlichen Referenzpositionen 71, 72, 73, 74 und 75 entsprechen relativ guten Übereinstimmungen zwischen dem empfangenen Funksignalmuster und den jeweiligen Referenz-Funksignalmustern. Die Referenzposition 71 stellt dabei die Referenzposition mit der besten Übereinstimmung dar. Die Referenzpositionen 72 bis 75 weisen eine genügende Übereinstimmung zwischen dem empfangenen Funksignalmuster und den jeweiligen Referenz-Funksignalmustern auf, so dass sie für die Zwecke der Kalibrierung ebenfalls verwendet werden können. Somit gehen die den Referenzpositionen 71 bis 75 entsprechenden Referenz-Funksignalmuster in die Auswahl der Referenz-Funksignalmuster 57 bzw. 66 (Fig. 5 und 6) ein. Auch wenn die Signalstärke des empfangenen Funksignalmusters an der aktuellen Position 76 aufgrund noch nicht erfolgter oder schlechter Kalibrierung in absoluten Werten erheblich von den Signalstärken abweichen sollte, die für die Referenzpositionen 71 bis 75 ermittelt wurden, so kann durch die Einrichtung zum Vergleichen 51, 61 gewährleistet werden, dass für die Kalibrierung solche Referenzpositionen verwendet werden, die in räumlicher Nähe zu der aktuellen Position 76 sind.

Fig. 8 zeigt ein schematisches Blockschaltbild eines Ausführungsbeispiels für ein Tiefpassfilter, wie es beispielsweise für das Vergangenheitsgewichtsfilter 58 oder das Tiefpassfilter 68 verwendet werden kann. Es handelt sich bei dem in Fig. 8 gezeigten Filter um ein rekursives Filter, das eine Filtereingangsgröße zunächst mit einem Filtereingangskoeffizienten 81 filtert. Der Filtereingangskoeffizient 81 ist hier in Abhängigkeit von einem Parameter a ausgedrückt, und zwar als 1/(1+a). Die mit dem Filtereingangskoeffizienten 81 multiplizierte Filtereingangsgröße wird einem Addierer 82 zugeführt. Der Addierer 82 hat noch einen weiteren Eingang über den ein vorheriger Filterausgangswert dem Addierer 82 zugeführt wird. Der vorherige Filterausgangswert wird am Ausgang des Addierers 82 abgegriffen, einem Verzögerungselement 83 zugeführt. und dann mit einem Filterrückkopplungskoeffizient 84 multipliziert, der in dem in Fig. 8 dargestellten Fall gleich dem Parameter a ist. Somit kann der Filterausgang zum Zeitpunkt k folgendermaßen ausgedrückt werden:

$$y[k] = (1/(1+a)) \cdot x[k] + a \cdot y[k-1].$$

Der Parameter a wird typischerweise relativ hoch gewählt werden, beispielsweise a = 500. Der Wert des Parameters a kann abhängig gemacht von einer aktuell eingestellten Abtastrate ("Polling Interval") sein.

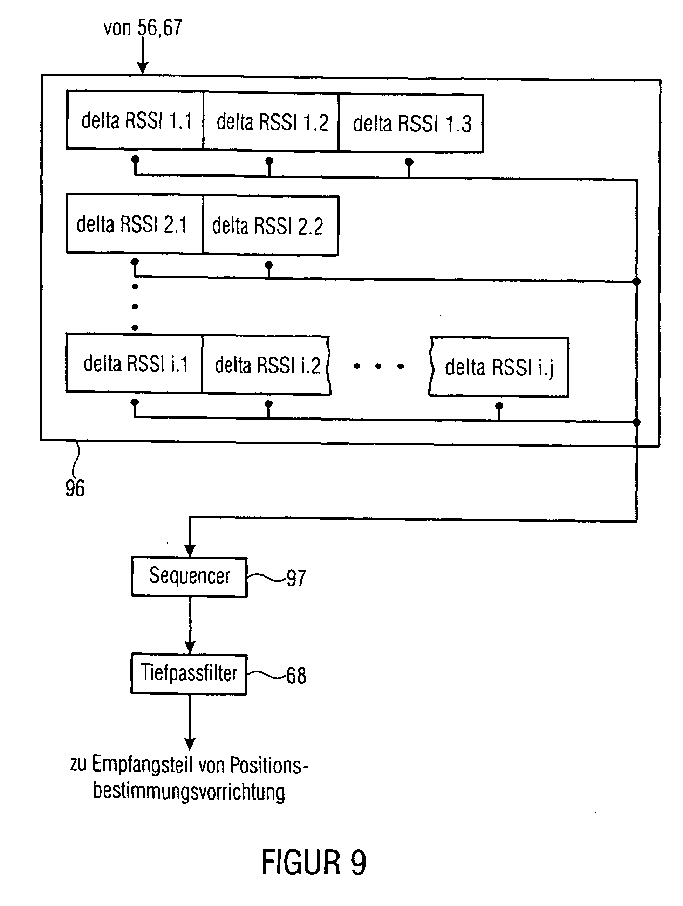

Fig. 9 zeigt eine schematische Darstellung für die Zuführung von Filtereingangswerten an das Tiefpassfilter 68. Die in den Einrichtungen zum Ermitteln der Signalstärkedifferenz 56, 67 ermittelten Signalstärkedifferenzen werden in einer Datenstruktur 96 zwischengespeichert. Die Datenstruktur 96 kann derart organisiert sein, dass die Signalstärkedifferenz für ein empfangenes Funksignalmuster gegenüber mehreren Referenz-Funksignalmustern in Vektoren unterschiedlicher Länge gespeichert sind. Die Vektoren können unterschiedliche Längen haben, da je nach empfangenem Funksignalmuster mehr oder weniger ausreichend Referenz-Funksignalmuster innerhalb der Auswahl-Untermenge zur Verfügung stehen. Die Vektoren innerhalb der Datenstruktur 96 können entsprechend dem Zeitpunkt ihres Hinzufügens zu der Datenstruktur 96 gekennzeichnet sein, so dass die Vektoren in dieser Reihenfolge von einem Sequenzer 97 ausgelesen werden können. Der Sequenzer 97 liest die einzelnen Signalstärkewerte des Vektors, der gerade ausgelesen wird, und leitet diese an das Tiefpassfilter 68 weiter. Nachdem der zu einem bestimmten Funksignalmuster gehörende Vektor ausgelesen ist, kann dieser innerhalb der Datenstruktur 96 gelöscht werden, so dass Speicherplatz freigegeben wird für neu ankommende Signalstärkedifferenzen.

Die Bezeichnung deltaRSSI i.j bezeichnet die Signalstärkedifferenz zwischen dem empfangenen Funksignalmuster i und dem Referenz-Funksignalmuster j, wobei j der Nummerierung innerhalb der Auswahlmenge an Referenz-Funksignalmustern für das empfangene Funksignalmuster i entspricht.

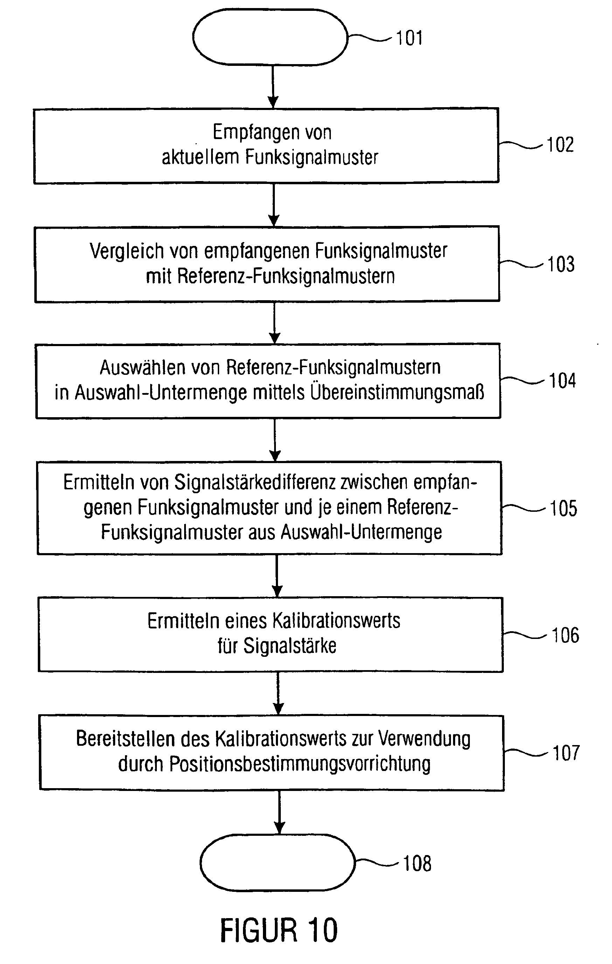

Fig. 10 zeigt ein schematisches Flussdiagram eines Verfahrens zum Kalibrieren gemäß einem Ausführungsbeispiel der hierin offenbarten Lehre. Nach dem Beginn des Verfahrens bei 101 wird bei 102 ein aktuelles Funksignalmuster empfangen. Das Verfahren zum Kalibrieren führt dann bei 103 einen Vergleich durch zwischen dem empfangenen Funksignalmuster mit einer Vielzahl von Referenz-Funksignalmustern. Auf der Grundlage des durchgeführten Vergleichs wird ein Referenz-Funksignalmuster oder werden mehrere Referenz-Funksignalmuster in eine Auswahl-Untermenge hineingewählt. Zu diesem Zweck wird ein Übereinstimmungsmaß zwischen dem empfangenen Funksignalmuster und je einem der Referenz-Funksignalmuster ausgewertet.

Für die in der Auswahl-Untermenge enthaltenen Referenz-Funksignalmuster wird jeweils eine Signalstärkedifferenz ermittelt zwischen dem empfangenen Funksignalmuster und je einem Referenz-Funksignalmuster (Kasten 105). Bei 106 wird ein Kalibrationswert für die Signalstärke ermittelt. Dies erfolgt auf der Grundlage der ermittelten Signalstärkedifferenzen, wobei typischerweise eine Mittelung über mehrere Signalstärkedifferenzen durchgeführt wird, um zufällige Schwankungen des Kalibrationswerts weitgehend zu vermeiden. Das Verfahren zum Kalibrieren stellt bei 107 den Kalibrationswert zur Verwendung durch die Positionsbestimmungsvorrichtung bereit. Typischerweise wird eine Empfangseinrichtung der Positionsbestimmungsvorrichtung den bereitgestellten Kalibrationswert verwenden. Die Empfangseinrichtung ist nach einer erfolgreichen Kalibrierung in der Lage, auch absolute Signalstärken der empfangenen Funksignalmuster bzw. der empfangenen Funksignale mit für Positionsbestimmungszwecke ausreichender Genauigkeit zu bestimmen. Das Verfahren endet bei 108, wobei es jedoch periodisch wiederholt werden kann. Beispielsweise kann es einmal pro Zeiteinheit ausgeführt werden, z. B. einmal alle 10 Sekunden, 30 Sekunden oder 60 Sekunden. Das Verfahren kann auch durch besondere Umstände ausgelöst werden, z. B. durch das Empfangen eines neuen Funksignalmusters.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung zur Kalibrierung einer Positionsbestimmungsvorrichtung (10), mit folgenden Merkmalen:

einer Einrichtung (51; 61) zum Vergleichen eines empfangenen Funksignalmusters mit einer Vielzahl von Referenz-Funksignalmustern, welche ausgebildet ist, eine Auswahl-Untermenge aus der Vielzahl der Referenz-Funksignalmuster mittels eines Überstimmungsmaßes zwischen dem empfangenen Funksignalmuster und jeweils einem Referenz-Funksignalmuster aus der Vielzahl der Referenz-Funksignalmuster auszuwählen;
einer Einrichtung (56; 67) zum Ermitteln von Signalstärkedifferenzen zwischen dem empfangenen Funksignalmuster und jeweils einem Referenz-Funksignalmuster der Auswahl-Untermenge; und
einer Einrichtung (58; 68) zum Ermitteln eines Kalibrierungswerts, auf den Signalstärkedifferenzen basierend, und zum Bereitstellen des Kalibrierungswerts an die Positionsbestimmungsvorrichtung,
**dadurch gekennzeichnet, dass** das empfangene Funksignalmuster zumindest eines umfasst von einer Senderkennung eines empfangbaren Funksenders und einer Signalstärke eines empfangenen Funksignals, und dass
die Einrichtung (51; 61) zum Vergleichen ferner ausgebildet ist, relative Signalstärken für unterschiedliche Senderkennungen innerhalb eines empfangenen Funksignalmusters mit entsprechenden relativen Signalstärken innerhalb eines Referenz-Funksignalmusters in Bezug zueinander zu setzen und daraus auf das Übereinstimmungsmaß zu schließen.

2. Vorrichtung gemäß Anspruch 1, wobei das Übereinstimmungsmaß indifferent hinsichtlich einer Skalierung des empfangenen Funksignalmusters und der Referenz- Funksignalmuster ist.

3. Vorrichtung gemäß Anspruch 1 oder 2, bei der die Einrichtung (51; 61) zum Vergleichen ausgebildet ist, das Übereinstimmungsmaß mit einem Schwellenwert $ACC_{Th}$ zu vergleichen, wobei das empfangene Funksignalmuster und ein bestimmtes Referenz-Funksignalmuster mit Bezug zueinander in die Auswahl-Untermenge aufgenommen werden, wenn das Übereinstimmungsmaß zwischen dem empfangenen Funksignalmuster und dem bestimmten Referenz-Funksignalmuster eine von dem Schwellenwert $ACC_{Th}$ definierte Bedingung erfüllt, und wobei das empfangene Funksignalmuster und das bestimmte Referenz-Funksignalmuster nicht in die Auswahl-Untermenge aufgenommen werden, wenn das entsprechende Übereinstimmungsmaß die von dem Schwellenwert $ACC_{Th}$ definierte Bedingung nicht erfüllt.

4. Vorrichtung gemäß einem vorhergehenden Ansprüche, bei der die Einrichtung (51; 61) zum Vergleichen ausgebildet ist, für die Auswahl-Untermenge solche Referenz-Funksignalmuster auszuwählen, deren Übereinstimmungsmaß mit dem empfangenen Funksignalmuster innerhalb eines Toleranzbereichs liegen, der einen bis dahin ermittelten besten Übereinstimmungsmaßwert umfasst.

5. Vorrichtung gemäß Anspruch 4, wobei der Toleranzbereich sich zumindest einseitig von dem bis dahin ermittelten besten Übereinstimmungsmaßwert erstreckt über eine Toleranzbereichsbreite, die 30 % des bis dahin ermittelten besten Übereinstimmungsmaßwerts beträgt, bevorzugt 10 % des bis dahin ermittelten besten Übereinstimmungsmaßwerts, weiter bevorzugt 5 % des bis dahin ermittelten besten Übereinstimmungsmaßwerts.

6. Vorrichtung gemäß einem der Ansprüche 1 bis 3, bei der die Einrichtung (51; 61) zum Vergleichen ausgebildet ist, solche Referenz-Funksignalmuster für die Auswahl-Untermenge auszuwählen, die folgende Kriterien erfüllen:

$$ACC_i \leq ACC_{max}$$

$$ACC_i \leq ACC_{Th}$$

$$ACC_{max} = ACC_0 \cdot LIMIT,$$

wobei $ACC_0$ ein Übereinstimmungsmaßwert eines Referenz-Funksignalmusters mit der derzeit besten Übereinstimmung ist, und $ACC_{Th}$ ein Schwellenwert für das Übereinstimmungsmaß bezüglich der Aufnahme in die Auswahl-Untermenge ist.

7. Vorrichtung gemäß einem der vorhergehenden Ansprüche, bei der die Einrichtung zum Ermitteln und Bereitstellen des Kalibrierungswerts ein Tiefpassfilter (58; 68) umfasst, das zumindest die Signalstärkedifferenzen oder den Kalibrierungswert filtert.

8. Vorrichtung gemäß Anspruch 7, wobei das Tiefpassfilter (58; 68) ein rekursives Filter ist mit einem Filtereingangskoeffizienten und einem Filterrückkopplungskoeffizienten, wobei der Filterrückkopplungskoeffizient größer als das Zehnfache des Filtereingangskoeffizienten, bevorzugt größer als das Hundertfache des Filtereingangskoeffizienten, weiter bevorzugt größer als das Tausendfache des Filtereingangskoeffizienten, weiter bevorzugt größer als das Zehntausendfache des Filtereingangskoeffizienten ist.

9. Vorrichtung gemäß Anspruch 7 oder 8, bei der das Tiefpassfilter (58; 68) ausgebildet ist, eine gemittelte Signalstärkedifferenz aus einer Vielzahl von Einzelsignalstärkedifferenzen zu bestimmen.

10. Vorrichtung gemäß Anspruch 8, wobei die Vielzahl von Einzelsignalstärkedifferenzen Signalstärkedifferenzen entsprechen, die sich innerhalb eines Referenz-Funksignalmusters aus der Vielzahl der Referenz-Funksignalmuster auf in dem Referenz-Funksignalmuster berücksichtigte Funksender beziehen, und wobei die Vielzahl der Einzelsignalstärkedifferenzen als Eingangsgrößen für das Tiefpassfilter (58; 68) dienen.

11. Positionsbestimmungsvorrichtung (10) zur funkbasierten Ortung, mit:

einer Vorrichtung zur Kalibrierung gemäß einem der vorhergehenden Ansprüche; und
einer Einrichtung zum Empfangen von Funksignalen, die ausgebildet ist, einen von der Vorrichtung zur Kalibrierung generierten Kalibrierungswert zu empfangen und die Funksignale mittels des generierten Kalibrierungswerts zu skalieren, so dass von der Einrichtung zum Empfangen der Funksignale ausgegebene skalierte Funksignaldaten in Bezug auf eine Signalstärke im Wesentlichen Referenzsignaldaten entsprechen, mit denen die Funksignaldaten verglichen werden.

12. Positionsbestimmungsvorrichtung (10) gemäß Anspruch 11, deren Funktionsweise auf einem Fingerprinting-Prinzip beruht.

13. Verfahren zum Kalibrieren einer auf funkbasierter Ortung basierenden Positionsbestimmungsvorrichtung, mit folgenden Schritten:

Vergleichen (103) eines empfangenen Funksignalmusters mit einer Vielzahl von Referenz-Funksignalmustern;
Auswählen (104) von Referenz-Funksignalmustern aus der Vielzahl von Referenz-Funksignalmustern in eine Auswahl-Untermenge mittels eines Übereinstimmungsmaßes zwischen dem empfangenen Funksignalmuster und jeweils einem Referenz-Funksignalmuster aus der Vielzahl der Referenz-Funksignalmuster;
Ermitteln (105) von Signalstärkedifferenzen zwischen dem empfangenen Funksignalmuster und jeweils einem Referenz-Funksignalmuster der Auswahl-Untermenge; und
Ermitteln (106) eines Kalibrationswerts für die Signalstärke und Bereitstellen des Kalibrationswerts zur Verwendung durch die Positionsbestimmungsvorrichtung,
**dadurch gekennzeichnet, dass** das empfangene Funksignalmuster zumindest eines umfasst von einer Senderkennung eines empfangenen Funksenders und einer Signalstärke eines empfangbaren Funksignals, und dass das Vergleichen des empfangenen Funksignalmusters mit der Vielzahl der Funksignalmuster relative Funksignalstärken für unterschiedliche Senderkennungen innerhalb des empfangenen Funksignalmusters mit entsprechenden relativen Signalstärken innerhalb eines Referenzmusters in Bezug zueinander setzt und daraus auf das Übereinstimmungsmaß schließt.

14. Computerprogramm zur Durchführung des Verfahrens gemäß Anspruch 13, wenn das Computerprogramm auf einem Prozessor oder Mikrocontroller abläuft.

## Claims

1. Apparatus for calibrating a position finding device (10), comprising:

a means (51; 61) for comparing a received radio signal pattern to a multitude of reference radio signal patterns, said means being configured to select a selection subset from the multitude of reference radio signal patterns by means of a measure of matching between the received radio signal pattern and one reference radio signal pattern, respectively, from the multitude of reference radio signal patterns;
a means (56; 67) for determining signal strength differences between the received radio signal pattern and one reference radio signal pattern, respectively, of the selection subset; and
a means (58; 68) for determining a calibration value based on the signal strength differences, and for providing said calibration value to the position finding device,

**characterized in that** the received radio signal pattern includes at least one of a transmitter ID of a receivable radio transmitter and a signal strength of a received radio signal, and that
the means (51; 61) for comparing is further configured to relate relative signal strengths for different transmitter IDs within a received radio signal pattern to corresponding relative signal strengths within a reference radio signal pattern and to infer the measure of matching therefrom.

2. Apparatus as claimed in claim 1, wherein the measure of matching is indifferent regarding a scaling of the received radio signal pattern and the reference radio signal patterns.

3. Apparatus as claimed in claims 1 or 2, wherein the means (51; 61) for comparing is configured to compare the measure of matching to a threshold value $ACC_{Th}$, wherein the received radio signal pattern and a specific reference radio signal pattern will be included, with respect to each other, into the selection subset if the measure of matching between the received radio signal pattern and the specific reference radio signal pattern meets a condition defined by the threshold value $ACC_{Th}$, and wherein the received radio signal pattern and the specific reference radio signal pattern will not be included into the selection subset if the corresponding measure of matching does not meet the condition defined by the threshold value $ACC_{Th}$.

4. Apparatus as claimed in any of the previous claims, wherein the means (51; 61) for comparing is configured to select, for the selection subset, such reference radio signal patterns whose measures of matching with the received radio signal pattern are within a tolerance range including a best measure-of-matching value determined up to this point.

5. Apparatus as claimed in claim 4, wherein the tolerance range extends at least on one side from the best measure-of-matching value determined up to this point over a tolerance range amounting to 30% of the best measure-of-matching value determined up to this point, preferably 10% of the best measure-of-matching value determined up to this point, and more preferably 5% of the best measure-of-matching value determined up to this point.

6. Apparatus as claimed in any of claims 1 or 3, wherein the means (51; 61) for comparing is configured to select such reference radio signal patterns for the selection subset which meet the following criteria:

$$ACC_i \leq ACC_{max}$$

$$ACC_i \leq ACC_{Th}$$

$$ACC_{max} = ACC_0 \cdot LIMIT,$$

wherein $ACC_0$ is a measure-of-matching value of a reference radio signal pattern having the currently best match, and $ACC_{Th}$ is a threshold value for the measure of matching with regard to inclusion into the selection subset.

7. Apparatus as claimed in any of the previous claims, wherein the means for determining and providing the calibration value includes a low-pass filter (58; 68) which filters at least the signal strength differences or the calibration value.

8. Apparatus as claimed in claim 7, wherein the low-pass filter (58; 68) is a recursive filter having a filter input coefficient and a filter feedback coefficient, the filter feedback coefficient being larger than ten times the filter input coefficient, preferably larger than a hundred times the filter input coefficient, further preferably larger than a thousand times the filter input coefficient, further preferably larger than ten thousand times the filter input coefficient.

9. Apparatus as claimed in claim 7 or 8, wherein the low-pass filter (58; 68) is configured to determine an averaged signal strength difference from a multitude of individual signal strength differences.

10. Apparatus as claimed in claim 8, wherein the multitude of individual signal strength differences correspond to signal strength differences that within a reference radio signal pattern among the multitude of reference radio signal patterns relate to radio transmitters taken into account in the reference radio signal pattern, and wherein the multitude of individual signal strength differences serve as input quantities for the low-pass filter (58; 68).

**11.** Position finding device (10) for radio-based localization, comprising:

an apparatus for calibrating as claimed in any of the previous claims; and
a means for receiving radio signals that is configured to receive a calibration value generated by the apparatus for calibrating and to scale the radio signals by means of the generated calibration value so that any scaled radio signal data output by the means for receiving the radio signals essentially correspond, in terms of signal strength, to reference signal data with which the radio signal data is compared.

**12.** Position finding device (10) as claimed in claim 11, whose mode of operation is based on a fingerprinting principle.

**13.** Method of calibrating a position finding device based on radio-based localization, comprising:

comparing (103) a received radio signal pattern to a multitude of reference radio signal patterns;
selecting (104) reference radio signal patterns from the multitude of reference radio signal patterns into a selection subset by means of a measure of matching between the received radio signal pattern and one reference radio signal pattern, respectively, from the multitude of reference radio signal patterns;
determining (105) signal strength differences between the received radio signal pattern and one reference radio signal pattern, respectively, of the selection subset; and
determining (106) a calibration value for the signal strength and providing the calibration value for utilization by the position finding device,
**characterized in that** the received radio signal pattern includes at least one of a transmitter ID of a received radio transmitter and a signal strength of a receivable radio signal, and that comparing the received radio signal pattern to the multitude of radio signal patterns relates relative radio signal strengths for different transmitter IDs within the received radio signal pattern to corresponding relative signal strengths within a reference pattern, and infers the measure of matching therefrom.

**14.** A computer program for performing the method as claimed in claim 13, when the computer program runs on a processor or microcontroller.

## Revendications

**1.** Dispositif d'étalonnage d'un dispositif de détermination de position (10), aux caractéristiques suivantes:

un moyen (51; 61) destiné à comparer un échantillon de signal radioélectrique reçu avec une pluralité d'échantillons de signal radioélectrique de référence, qui est réalisé pour sélectionner une sous-quantité de sélection parmi la pluralité d'échantillons de signal radioélectrique de référence au moyen d'une mesure de coïncidence entre l'échantillon de signal radioélectrique reçu et chaque fois un échantillon de signal radioélectrique de référence parmi la pluralité d'échantillons de signal radioélectrique de référence;
un moyen (56; 67) destiné à déterminer des différences d'intensité de signal entre l'échantillon de signal radioélectrique reçu et chaque fois un échantillon de signal radioélectrique de référence de la sous-quantité de sélection; et
un moyen (58; 68) destiné à déterminer une valeur d'étalonnage sur base des différences d'intensité de signal et à mettre la valeur d'étalonnage à disposition du dispositif de détermination de position,
**caractérisé par le fait que** l'échantillon de signal radioélectrique reçu comporte au moins l'une parmi une identification d'un émetteur radio pouvant être reçu et un intensité de signal d'un signal radioélectrique reçu, et que
le dispositif (51; 61) destiné à comparer est par ailleurs réalisé pour mettre en rapport les intensités de signal relatives pour différentes identifications d'émetteur dans un échantillon de signal radioélectrique reçu avec les intensités de signal relatives correspondantes dans un échantillon de signal radioélectrique de référence et pour en conclure la mesure de coïncidence.

**2.** Dispositif selon la revendication 1, dans lequel la mesure de coïncidence est indifférente en ce qui concerne un échelonnement de l'échantillon de signal radioélectrique reçu et de l'échantillon de signal radioélectrique de référence.

**3.** Dispositif selon la revendication 1 ou 2, dans lequel le moyen (51; 61) destiné à comparer est réalisé pour comparer la mesure de coïncidence avec une valeur de seuil $ACC_{Th}$, l'échantillon de signal radioélectrique reçu et un échantillon de signal radioélectrique de référence déterminé ayant un rapport entre eux étant repris dans la sous-quantité de sélection lorsque la mesure de coïncidence entre l'échantillon de signal radioélectrique reçu et l'échantillon de signal radioélectrique de référence déterminé remplit une condition définie par la valeur de seuil $ACC_{Th}$, et l'échantillon de signal radioélectrique reçu et l'échantillon de signal radioélectrique de référence déterminé n'étant pas repris dans la sous-quantité de sélection lorsque la mesure de coïncidence correspondante ne remplit pas la condition définie par la valeur de seuil $ACC_{Th}$.

4. Dispositif selon l'une des revendications précédentes, dans lequel le moyen (51; 61) destiné à comparer est réalisé pour sélectionner pour la sous-quantité de sélection les échantillons de signal radioélectrique de référence dont la mesure de coïncidence avec l'échantillon de signal radioélectrique reçu se situe dans une plage de tolérance qui comprend une valeur de mesure de coïncidence la meilleure déterminée jusque-là.

5. Dispositif selon la revendication 4, dans lequel la plage de tolérance s'étend au moins d'un côté à partir de la valeur de mesure de coïncidence la meilleure déterminée jusque-là sur une largeur de plage de tolérance qui est de 30% de la valeur de mesure de coïncidence la meilleure déterminée jusque-là, de préférence de 10% de la valeur de mesure de coïncidence la meilleure déterminée jusque-là, plus préférablement de 5% de la valeur de mesure de coïncidence la meilleure déterminée jusque-là.

6. Dispositif selon l'une des revendications 1 à 3, dans lequel le moyen (51; 61) destiné à comparer est réalisé pour sélectionner pour la sous-quantité de sélection les échantillons de signal radioélectrique de référence qui remplissent les critères suivants:

$$ACC_i \leq ACC_{max}$$

$$ACC_i \leq ACC_{Th}$$

$$ACC_{max} = ACC_0 \cdot LIMIT,$$

où $ACC_0$ est une valeur de mesure de coïncidence d'un échantillon de signal radioélectrique de référence à la coïncidence actuellement la meilleure, et $ACC_{Th}$ est une valeur de seuil pour la mesure de coïncidence en ce qui concerne la reprise dans la sous-quantité de sélection.

7. Dispositif selon l'une des revendications précédentes, dans lequel le moyen destiné à déterminer et mettre à disposition la valeur d'étalonnage comporte un filtre passe-bas (58; 68) qui filtre au moins les différences d'intensité de signal ou la valeur d'étalonnage.

8. Dispositif selon la revendication 7, dans lequel le filtre passe-bas (58; 68) est un filtre récursif avec un coefficient d'entrée de filtre et un coefficient de couplage rétroactif de filtre, où le coefficient de couplage rétroactif de filtre est supérieur à dix fois le coefficient d'entrée de filtre, de préférence supérieur à cent fois le coefficient d'entrée de filtre, plus préférablement supérieur à mille fois le coefficient d'entrée de filtre, encore plus préférablement supérieur à dix mille fois le coefficient d'entrée de filtre.

9. Dispositif selon la revendication 7 ou 8, dans lequel le filtre passe-bas (58; 68) est réalisé pour déterminer une différence d'intensité de signal moyenne parmi une pluralité de différences d'intensité de signal individuelles.

10. Dispositif selon la revendication 8, dans lequel la pluralité de différences d'intensité de signal individuelles correspondent à des différences d'intensité de signal qui se rapportent, dans un échantillon de signal radioélectrique de référence parmi la pluralité d'échantillons de signal radioélectrique de référence, à des émetteurs radio pris en compte dans l'échantillon de signal radioélectrique de référence, et dans lequel la pluralité de différences d'intensité de signal individuelles servent de grandeurs d'entrée pour le filtre passe-bas (58; 68).

11. Dispositif de détermination de position (10) basé sur une orientation radio, avec:

un dispositif d'étalonnage selon l'une des revendications précédentes; et

un moyen destiné à recevoir des signaux radioélectriques, qui est réalisé pour recevoir une valeur d'étalonnage générée par le dispositif d'étalonnage et pour échelonner les signaux radioélectriques au moyen de la valeur d'étalonnage générée de sorte que les données de signal radioélectrique échelonnées sorties par le moyen destiné à recevoir les signaux radioélectriques correspondent, en ce qui concerne une intensité de signal, sensiblement aux données de signal de référence auxquelles sont comparées les données de signal radioélectrique.

**12.** Dispositif de détermination de position (10) selon la revendication 11, dont le fonctionnement se base sur un principe d'empreinte digitale.

**13.** Procédé pour étalonner un dispositif de détermination de position basé sur une orientation radio, aux étapes suivantes consistant à:

comparer (103) un échantillon de signal radioélectrique reçu avec une pluralité d'échantillons de signal radioélectrique de référence;
sélectionner (104) des échantillons de signal radioélectrique de référence parmi la pluralité d'échantillons de signal radioélectrique de référence dans une sous-quantité de sélection au moyen d'une mesure de coïncidence entre l'échantillon de signal radioélectrique reçu et chaque fois un échantillon de signal radioélectrique de référence parmi la pluralité d'échantillons de signal radioélectrique de référence;
déterminer (105) des différences d'intensité de signal entre l'échantillon de signal radioélectrique reçu et chaque fois un échantillon de signal radioélectrique de référence de la sous-quantité de sélection; et
déterminer (106) une valeur d'étalonnage pour l'intensité de signal et mettre la valeur d'étalonnage à disposition pour utilisation par le dispositif de détermination de position,
**caractérisé par le fait que** l'échantillon de signal radioélectrique reçu comprend au moins l'une parmi une identification d'un émetteur radio reçu et une intensité de signal d'un signal radioélectrique pouvant être reçu, et que la comparaison de l'échantillon de signal radioélectrique reçu avec la pluralité d'échantillons de signal radioélectrique met en rapport l'une avec l'autre des intensités de signal radioélectrique relatives pour différentes identifications d'émetteur dans l'échantillon de signal radioélectrique reçu avec les intensités de signal relatives correspondantes dans un échantillon de référence et en conclut la mesure de coïncidence.

**14.** Programme d'ordinateur pour réaliser le procédé selon la revendication 13 lorsque le programme d'ordinateur est exécuté sur un processeur ou un microcontrôleur.

Funksender 2

Funksender 4

$d_2$

$d_4$

17

19

akt. Position

Positions-bestimmungs-vorrichtung

10

$d_1$

$d_3$

Funksender 1

16

Funksender 3

18

FIGUR 1

Sifnalstärke von Funksender i
bei aktueller Position

FIGUR 2

FIGUR 3

23

FIGUR 4

FIGUR 5

empfangenes
Funksignalmuster

Funksignalmustervergleich
61

$ACC_i$

$ACC_i \leq ACC_{Th}$?
62

$Acc_i$

Auswahl der
besten $ACC_i$
63

i

$ACC_{Th}$

Referenz-
funksignalmuster
64

i

Datenbankabfrage
65

Referenz-
funksignalmuster $_i$

Auswahl
Referenz-
funksignalmuster
66

Ermittlung
Signalstärkedifferenz
67

delta RSSI-Werte

Tiefpassfilter
68

Kalibrierungswert

Bereitstellung
Kalibrierungswert
69

zu Empfangsteil von Positionsbestimmungsvorrichtung

FIGUR 6

25

FIGUR 7

FIGUR 8

von 56,67

| delta RSSI 1.1 | delta RSSI 1.2 | delta RSSI 1.3 |
|---|---|---|

| delta RSSI 2.1 | delta RSSI 2.2 |
|---|---|

| delta RSSI i.1 | delta RSSI i.2 | • • • | delta RSSI i.j |
|---|---|---|---|

96

Sequencer ~97

Tiefpassfilter ~68

zu Empfangsteil von Positionsbestimmungsvorrichtung

FIGUR 9

101

Empfangen von
aktuellem Funksignalmuster — 102

Vergleich von empfangenen Funksignalmuster
mit Referenz-Funksignalmustern — 103

Auswählen von Referenz-Funksignalmustern
in Auswahl-Untermenge mittels Übereinstimmungsmaß — 104

Ermitteln von Signalstärkedifferenz zwischen empfangenen Funksignalmuster und je einem Referenz-
Funksignalmuster aus Auswahl-Untermenge — 105

Ermitteln eines Kalibrationswerts
für Signalstärke — 106

Bereitstellen des Kalibrationswerts zur Verwendung
durch Positionsbestimmungsvorrichtung — 107

108

# FIGUR 10

**IN DER BESCHREIBUNG AUFGEFÜHRTE DOKUMENTE**

**In der Beschreibung aufgeführte Patentdokumente**

- EP 1795912 A1

- DE 102008036681 A1